(19) Europäisches Patentamt
European Patent Office
Office européen des brevets

(11) **EP 4 455 109 A1**

(12) **EUROPEAN PATENT APPLICATION**
published in accordance with Art. 153(4) EPC

(43) Date of publication:
**30.10.2024 Bulletin 2024/44**

(21) Application number: **22911376.6**

(22) Date of filing: **22.12.2022**

(51) International Patent Classification (IPC):
**C04B 35/486** (2006.01)

(52) Cooperative Patent Classification (CPC):
**C04B 35/486**

(86) International application number:
**PCT/JP2022/047475**

(87) International publication number:
**WO 2023/120674 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 JP 2021208533**

(71) Applicant: **Kuraray Noritake Dental Inc.
Kurashiki-shi, Okayama 710-0801 (JP)**

(72) Inventors:
• **NAKANO Kirihiro
Miyoshi-shi, Aichi 470-0293 (JP)**
• **KASHIKI Nobusuke
Miyoshi-shi, Aichi 470-0293 (JP)**

(74) Representative: **D Young & Co LLP
3 Noble Street
London EC2V 7BQ (GB)**

(54) **ZIRCONIA COMPOSITION, ZIRCONIA CALCINED BODY, ZIRCONIA SINTERED BODY, METHOD FOR PRODUCING ZIRCONIA CALCINED BODY, AND METHOD FOR PRODUCING ZIRCONIA SINTERED BODY**

(57) The present invention provides a zirconia composition that exhibits excellent translucency in its sintered body and that enables the mitigation of opalescent properties in the sintered body. The invention also provides a zirconia pre-sintered body and zirconia sintered body therefrom, along with methods that enable easy production of these. The present invention relates to a zirconia composition comprising a zirconia particle, and a stabilizer particle capable of preventing a phase transformation of zirconia, wherein: the zirconia has an average particle diameter (r1) of 1 to 60 nm, the stabilizer has an average particle diameter (r2) of 1 to 60 nm, and the half width of a peak derived from the stabilizer in a powder X-ray diffraction pattern by CuKα radiation is 0.05° to 1.0°. Using the zirconia composition allows the zirconia sintered body to exhibit reduced regularity in its structure, mitigating wavelength-selective reflection and/or transmission, resulting in reduced opalescent properties. This leads to the production of a zirconia sintered body that exhibits excellent translucency and low opalescent properties.

FIG.1

EP 4 455 109 A1

**Description**

TECHNICAL FIELD

The present invention relates to zirconia (zirconium(IV) oxide; $ZrO_2$) sintered bodies that exhibit both high translucency and low opalescent properties, pre-sintered bodies and compositions for obtaining such sintered bodies, and methods of production thereof.

BACKGROUND ART

Over the last years, zirconia sintered bodies containing yttria have been used in dental prostheses and other dental material applications, replacing traditional metallic dental prostheses, such as silver teeth, in view of aesthetic considerations. The production of such dental prostheses often involves molding particles of zirconia composition or a slurry containing such particles to prepare a zirconia molded body of a desired shape such as a disc or prism, and pre-sintering the molded body to create a pre-sintered body (mill blank), which is then cut (milled) into the intended dental prosthesis shape, and sintered.

It has been confirmed that the linear light transmittance can improve when the zirconia sintered body has a uniformly small crystal grain size (see, for example, Patent Literature 1). To achieve a small and uniform crystal grain size in zirconia sintered bodies, hot isostatic pressing (HIP) is necessary. However, the HIP device used for hot isostatic pressing is a specialized type of equipment categorized as high-pressure gas production device, and it is difficult to say that production of zirconia sintered bodies with high linear light transmittance is easily achievable.

In this connection, there have been proposals for zirconia sintered bodies that exhibit both outstanding mechanical strength and translucency, without using a HIP device, along with zirconia molded bodies and zirconia pre-sintered bodies capable of yielding such zirconia sintered bodies (Patent Literatures 2 and 3).

CITATION LIST

Patent Literature

Patent Literature 1: JP 2008-214168 A
Patent Literature 2: WO2020/179876
Patent Literature 3: WO2020/179877

SUMMARY OF INVENTION

Technical Problem

However, examinations by the present inventors revealed that using nanoparticles having an average particle diameter (average primary particle diameter) of less than 100 nm (for example, zirconia with an average primary particle diameter of less than 100 nm) as in Patent Literatures 2 and 3 poses an issue when the crystalline structure is simply held compact. It was observed that the crystals, due to their uniform structure, selectively reflect or transmit a specific wavelength, resulting in the manifestation of color, commonly referred to as structural color (hereinafter, such characteristics will be called "opalescent properties"). Consequently, providing an appearance similar to the shade of natural teeth has been difficult to achieve for reasons attributed to the use of nanoparticles.

It is accordingly an object of the present invention to provide a zirconia composition that exhibits excellent translucency in its sintered body and that enables the mitigation of opalescent properties in the sintered body. Another object of the invention is to provide a zirconia pre-sintered body and zirconia sintered body therefrom, along with methods that enable easy production of these.

Solution to Problem

The present inventors conducted intensive studies to find a solution to the foregoing issue, and found that a zirconia sintered body satisfying both high translucency and low opalescent properties can be provided when wavelength-selective reflection and/or transmission is mitigated through a reduction in the structural regularity of zirconia sintered body by sintering a zirconia composition that comprises a zirconia particle, and a stabilizer particle capable of preventing a phase transformation of zirconia, and in which the zirconia has an average particle diameter (r1) of 1 to 60 nm, the stabilizer has an average particle diameter (r2) of 1 to 60 nm, and the half width of a peak derived from the stabilizer in a powder X-ray diffraction pattern by CuKα radiation is 0.05° to 1.0°. This led to the completion of the present invention after further examinations.

Specifically, the present invention relates to the following.

[1] A zirconia composition comprising a zirconia particle, and a stabilizer particle capable of preventing a phase transformation of zirconia, wherein:

the zirconia particle has an average particle diameter (r1) of 1 to 60 nm,
the stabilizer particle has an average particle diameter (r2) of 1 to 60 nm, and
the half width of a peak derived from the stabilizer in a powder X-ray diffraction pattern by CuKα radiation is 0.05° to 1.0°.

[2] The zirconia composition according to [1], wherein the content of the stabilizer is 2 to 9 mol% relative to the total mole of the zirconia and the stabilizer.

[3] The zirconia composition according to [1] or [2], wherein the stabilizer is yttria.

[4] The zirconia composition according to any one of [1] to [3], wherein the zirconia particle comprises a monoclinic crystal system.

[5] A zirconia pre-sintered body comprising zirconia, and a stabilizer capable of preventing a phase transformation of zirconia, wherein:

at least a part of the stabilizer is not dissolved in zirconia as a solid solution,
the monoclinic crystal fraction $f_m$ represented by the mathematical formula (1) below is 50 to 98%, and
the stabilizer has a local abundance of 10 to 90 mol% in particles derived from the stabilizer,

$$f_m = I_{28}/(I_{28}+I_{30})*100 \qquad (1),$$

wherein $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

[6] The zirconia pre-sintered body according to [5], wherein the content of the stabilizer is 2 to 9 mol% relative to the total mole of the zirconia and the stabilizer.

[7] The zirconia pre-sintered body according to [5] or [6], wherein the stabilizer is yttria.

[8] The zirconia pre-sintered body according to any one of [5] to [7], which has an OP value of less than 15 in a sintered body of 1.2 mm thickness after 120 minutes of sintering at 900 to 1,400°C, as calculated from the following mathematical formula (2),

[Math. 1]

$$\text{OP value} = \sqrt{\left(a*_{transmission} - a*_{reflection}\right)^2 + \left(b*_{transmission} - b*_{reflection}\right)^2} \qquad (2)$$

wherein $a*_{transmission}$ and $b*_{transmission}$ represent the color coordinates of L*a*b* color system for transmitted light, and $a*_{reflection}$ and $b*_{reflection}$ represent the color coordinates of L*a*b* color system for reflected light.

[9] The zirconia pre-sintered body according to any one of [5] to [8], which has a number-based particle size distribution with at least one peak top within a particle size range of 70 nm to 100 nm in a sintered body after 120 minutes of sintering at 900 to 1,400°C, and comprises 3 to 15% of particles with a particle diameter exceeding 100 nm in the sintered body.

[10] The zirconia pre-sintered body according to any one of [5] to [9], which has a ΔL*(W-B) of 5 or more in a sintered body of 1.2 mm thickness after 120 minutes of sintering at 900 to 1,400°C.

[11] The zirconia pre-sintered body according to any one of [5] to [10], wherein a first translucency $\Delta L_1*(W-B)$ of a first sintered body fabricated by 120 minutes of sintering at 1,300°C, and a second translucency $\Delta L_2*(W-B)$ of a second sintered body fabricated by 10 minutes of sintering at 1,300°C satisfy the relationship of the following mathematical formula (3),

$$\Delta L_2*(W-B)/\Delta L_1*(W-B) \geq 0.85 \qquad (3).$$

[12] A method for producing a zirconia pre-sintered body, comprising using a zirconia composition of any one of [1] to [4].

[13] A zirconia sintered body comprising zirconia, and a stabilizer capable of preventing a phase transformation of zirconia, wherein:

the zirconia sintered body has a stabilizer content of 2 to 9 mol% relative to the total mole of the zirconia and the stabilizer, and has a ΔL*(W-B) of 5 or more, and an OP value of less than 15, as calculated from the following mathematical formula (2), in a sintered body of 1.2 mm thickness,

[Math. 2]

$$\text{OP value} = \sqrt{\left(a*_{\text{transmission}} - a*_{\text{reflection}}\right)^2 + \left(b*_{\text{transmission}} - b*_{\text{reflection}}\right)^2} \qquad (2)$$

wherein $a*_{\text{transmission}}$ and $b*_{\text{transmission}}$ represent the color coordinates of L*a*b* color system for transmitted light, and $a*_{\text{reflection}}$ and $b*_{\text{reflection}}$ represent the color coordinates of L*a*b* color system for reflected light.

[14] The zirconia sintered body according to [13], wherein the stabilizer is yttria.

[15] The zirconia sintered body according to [13] or [14], which has a number-based particle size distribution with at least one peak top within a particle size range of 70 nm to 100 nm, and comprises 3 to 15% of particles with a particle diameter exceeding 100 nm.

[16] A method for producing a zirconia sintered body, comprising using a zirconia composition of any one of [1] to [4], or a zirconia pre-sintered body of any one of [5] to [11].

[17] The method for producing a zirconia sintered body according to [16], which comprises sintering at 900 to 1,400°C.

Advantageous Effects of Invention

According to the present invention, a zirconia composition can be provided that exhibits excellent translucency in its sintered body and that enables the mitigation of opalescent properties in the sintered body. The present invention can also provide a zirconia pre-sintered body and zirconia sintered body therefrom, along with methods that enable easy production of these.

The present invention enables the mitigation of opalescent properties while achieving excellent translucency, providing a zirconia sintered body capable of showing an appearance closer to the shade of natural teeth.

The present invention can also provide a method that enables easy production of a zirconia pre-sintered body capable of yielding such a zirconia sintered body, and a method that enables easy production of the zirconia sintered body.

BRIEF DESCRIPTION OF DRAWINGS

[FIG. 1] A particle size chart of a zirconia composition according o Example 1.

[FIG. 2] An XRD (X-Ray Diffraction) chart of the stabilizer in a zirconia composition according to Example 1.

[FIG. 3] A compositional distribution of the crystalline structure of a zirconia pre-sintered body according to Example 1 (SEM-EDX).

[FIG. 4] A compositional distribution of the crystalline structure of a zirconia pre-sintered body according to Comparative Example 2 (SEM-EDX)

[FIG. 5] A particle size chart of zirconia sintered bodies according to Example 1 and Comparative Example 2.

DESCRIPTION OF EMBODIMENTS

The present invention encompasses a zirconia composition that comprises a zirconia particle, and a stabilizer particle capable of preventing a phase transformation of zirconia, and in which the zirconia has an average particle diameter (r1) of 1 to 60 nm, the stabilizer has an average particle diameter (r2) of 1 to 60 nm, and the half width of a peak derived from the stabilizer in a powder X-ray diffraction pattern by CuKα radiation is 0.05° to 1.0°. With the use of the zirconia composition, a zirconia sintered body can be provided that exhibits low opalescent properties and excellent translucency. A zirconia sintered body obtained from a zirconia composition of the present invention excels in translucency even after brief sintering.

The present invention also encompasses a zirconia pre-sintered body that comprises zirconia, and a stabilizer capable of preventing a phase transformation of zirconia, and in which at least a part of the stabilizer is not dissolved in zirconia as a solid solution, the monoclinic crystal fraction $f_m$ represented by the mathematical formula (1) below is 50 to 98%, and the stabilizer has a local abundance of 10 to 90 mol%. With the use of the zirconia pre-sintered body, a zirconia sintered body can be provided that has excellent translucency and reduced opalescent properties.

$$f_m = I_{28}/(I_{28}+I_{30})*100 \qquad (1),$$

wherein $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

The zirconia composition is described first.

[Zirconia Composition]

A zirconia composition of the present invention comprises a zirconia particle, and a stabilizer particle capable of preventing a phase transformation of zirconia.

In view of providing desired properties such as ensuring that at least a part of the stabilizer capable of preventing a phase transformation of zirconia (hereinafter, also referred to as "stabilizer") is not dissolved in zirconia as a solid solution, it is preferable to separately prepare the zirconia particle and the stabilizer particle capable of preventing a phase transformation of zirconia. In view of mitigating the opalescent properties in a sintered body obtained from the zirconia composition, and providing excellent translucency even after brief sintering of a zirconia pre-sintered body prepared from the zirconia composition, it is preferable that the zirconia particle comprise a monoclinic crystal system.

By separately preparing and using these particles, it is possible to sufficiently enhance the crystallinity of the zirconia composition when the process is combined with the technical features of other manufacturing processes in the production of zirconia composition, zirconia pre-sintered body, or zirconia sintered body. This initiates phase transformation in the vicinity of the stabilizer when the stabilizer forms a solid solution with zirconia, resulting in a crystalline structure that is less likely to be composed of uniformly small particles after sintering. Presumably, this decreases the regularity of the zirconia sintered body structure, and mitigates wavelength-selective reflection and/or transmission, yielding a zirconia sintered body satisfying both high translucency and low opalescent properties.

In a composition of the present invention, the average particle diameter (r1) of zirconia particles, and the average particle diameter (r2) of stabilizer particles capable of preventing a phase transformation of zirconia are both 60 nm or less, preferably 50 nm or less, more preferably 40 nm or less, even more preferably 35 nm or less. When r1 and r2 are 60 nm or less, the crystalline structure diminishes after sintering, resulting in enhanced translucency. The average particle diameters r1 and r2 are both 1 nm or more, preferably 2 nm or more, more preferably 5 nm or more, even more preferably 10 nm or more. When r1 and r2 are 1 nm or more, it is possible to reduce aggregation of primary particles. The ranges of r1 and r2 may be any combinations of these values. For example, r1 and r2, which fall within the range of 1 to 60 nm, are preferably 2 to 50 nm, more preferably 5 to 40 nm, even more preferably 10 to 35 nm. The average particle diameters r1 and r2 are average diameters of primary particles, and may be the same or different, as long as the foregoing ranges are satisfied. The average primary particle diameter can be measured after pulverization. The method of measurement of average primary particle diameter is not particularly limited. For example, the average primary particle diameter can be determined through observation using a high-magnification electron microscope. A specific example of the method is described in the EXAMPLES section below.

In certain embodiments, it is preferable to have a smaller r2 and a larger r1 to reduce opalescent properties. Particularly, having a smaller r2 and a larger r1 is preferable because opalescent properties tend to decrease when the ratio (r2/r1) is less than 0.5.

A certain embodiment where r1 and r2 have similar values is also preferable because, when the stabilizer content is low, such an embodiment reduces the occurrence of the stabilizer in the zirconia composition, producing a non-uniform crystalline structure and reducing opalescent properties.

An example of a certain embodiment where r1 and r2 have similar values is a zirconia composition in which the ratio (r2/r1) is 0.5 to 2, and the stabilizer content is 2.0 to 6.0 mol% relative to the total mole of zirconia and stabilizer. In such embodiments, the ratio (r2/r1) may be 0.55 to 1.5. In these embodiments, the stabilizer content may be 2.0 to 5.5 mol% relative to the total mole of zirconia and stabilizer.

The particle size distribution of the stabilizer particles contained in a zirconia composition of the present invention should preferably exhibit a bimodal shape (two peaks), a tailing shape with one peak and a shoulder (for example, a tailing shape with a peak on the smaller particle diameter side and a shoulder on the larger particle diameter side), or a leading shape with one peak and a shoulder (for example, a leading shape with a peak on the larger particle diameter side and a shoulder on the smaller particle diameter side). Having a larger stabilizer particle diameter within the specified range of average particle diameters (r2) is preferred in view of preventing a complete solid dissolution of the stabilizer and zirconia, and reducing opalescent properties. The particle size distribution of stabilizer particles can be measured using the method described in the EXAMPLES section below.

In view of providing a crystalline structure with reduced opalescent properties, the ratio (r2/r1) of the average particle diameter (r1) of zirconia particles and the average particle diameter (r2) of stabilizer particles capable of preventing a phase transformation of zirconia is preferably 0.1 to 10, more preferably 0.2 to 6. A ratio (r2/r1) of 0.1 or more is preferable because it can restrict the extent of grain growth while the stabilizer is forming a solid solution with zirconia particles, and provide a sintered body of a crystal grain size that is less likely to exhibit opalescent properties. A ratio (r2/r1) of 10 or less is preferable because it prevents uneven distribution of the stabilizer, and mitigates the reduction in translucency ($\Delta L^*(W-B)$) caused by localized grain growth.

In view of preventing a nearly uniform sintering process that leads to opalescent properties resulting from the uniformity of the structure after sintering, it is preferable in a zirconia composition of the present invention that the stabilizer is not fully dissolved in zirconia as a solid solution. Here, the stabilizer not being fully dissolved in zirconia as a solid solution means that at least a part of the stabilizer is not dissolved in zirconia as a solid solution. Whether at least a part of the stabilizer is not dissolved in zirconia as a solid solution can be determined from, for example, an X-ray diffraction (XRD) pattern of the zirconia composition by CuK$\alpha$ radiation. The stabilizer can be said as being present in the zirconia composition without forming a solid solution with zirconia when the XRD pattern of the zirconia composition shows a peak derived from the stabilizer.

In view of providing a crystalline structure that enhances the translucency of the sintered body while reducing opalescent properties, the peak derived from the stabilizer in the XRD pattern has a half width of 1.0° or less, preferably 0.8° or less, more preferably 0.6° or less. In view of the compositional distribution of the stabilizer, the half width is 0.05° or more, preferably 0.1° or more, even more preferably 0.2° or more. These values may be combined within the range of 0.05° to 1.0°. The preferred half width is, for example, 0.1° to 0.8°, more preferably 0.2° to 0.6°.

With a half width of 0.05° to 1.0° in the peak derived from the stabilizer, in combination with the average particle diameter (r1) range of zirconia particles and the average particle diameter (r2) range of stabilizer particles specified above, the zirconia pre-sintered body can have a monoclinic crystal fraction $f_m$ of 50% to 98%, and the zirconia sintered body can have a $\Delta L^*(W-B)$ of 5 or more, and an OP value of less than 15 as calculated from mathematical formula (2).

With the half width ranges specified above, the local abundance of the stabilizer in particles derived from the stabilizer can be adjusted within the desired range when the monoclinic crystal fraction $f_m$ in a zirconia pre-sintered body prepared from the zirconia composition is 50 to 98%, allowing the zirconia sintered body after sintering of the zirconia pre-sintered body to have an OP value of less than 15, as calculated from mathematical formula (2).

The term "half width" in this specification refers to the width of a peak at its half-maximum intensity in a peak derived from the stabilizer in a powder X-ray diffraction pattern by CuK$\alpha$ radiation (unit: °). For example, the half width can be measured under the measurement conditions presented in the EXAMPLES section below.

The stabilizer content in a zirconia composition of the present invention is preferably 2 mol% or more, more preferably 3 mol% or more, even more preferably 4 mol% or more relative to the total mole of zirconia (zirconium(IV) oxide; $ZrO_2$) and stabilizer. A stabilizer content of 2 mol% or more is preferred because it leads to a sintered body of a crystal form more abundant in cubic crystal system, resulting in enhanced translucency.

The stabilizer content is preferably 9 mol% or less, more preferably 8.5 mol% or less, even more preferably 8 mol% or less. A stabilizer content of 9 mol% or less is preferred because it ensures that there is no excessive fraction of the cubic crystal system within the crystal system, facilitating the reduction of grain growth, preventing an excessively large crystalline structure, and mitigating the decrease in translucency.

The range of stabilizer contents may be any combination of these values. For example, the preferred stabilizer content is 2 to 9 mol%, more preferably 3 to 8 mol%.

The stabilizer is preferably one capable of forming partially-stabilized zirconia. Examples of such stabilizers include oxides such as calcium oxide (CaO), magnesium oxide (MgO), yttria ($Y_2O_3$), cerium oxide ($CeO_2$), scandium oxide ($Sc_2O_3$), niobium oxide ($Nb_2O_5$), lanthanum oxide ($La_2O_3$), erbium oxide ($Er_2O_3$), praseodymium oxide (PreOn, $Pr_2O_3$), samarium oxide ($Sm_2O_3$), europium oxide ($Eu_2O_3$), and thulium oxide ($Tm_2O_3$). Yttria is preferred in view of providing a sintered body that exhibits excellent translucency even after brief sintering, in combination with other features such as the predetermined half width.

The stabilizer content in the overall composition can be quantified using standard analytical techniques. These may include methods such as inductively coupled plasma (ICP) emission spectral analysis, X-ray fluorescence analysis (XRF), and energy-dispersive or wavelength-dispersive X-ray analysis (SEM-EDX or SEM-WDX) coupled with a scanning electron microscope.

A zirconia composition of the present invention may optionally comprise additives (excluding the stabilizer) such as colorants (including pigments, composite pigments, and fluorescent agents), alumina ($Al_2O_3$), titanium oxide ($TiO_2$), and silica ($SiO_2$). These components may be used alone, or two or more thereof may be used in combination.

Examples of the pigments include oxides of at least one element selected from the group consisting of Ti, V, Cr, Mn, Fe, Co, Ni, Zn, Y, Zr, Sn, Sb, Bi, Ce, Sm, Eu, Gd, and Er.

Examples of the composite pigments include $(Zr,V)O_2$, $Fe(Fe,Cr)_2O_4$, $(Ni,Co,Fe)(Fe,Cr)_2O_4 \cdot ZrSiO_4$, and

$(Co,Zn)Al_2O_4$.

A zirconia composition of the present invention may comprise a fluorescent agent. The zirconia sintered body shows fluorescence when the zirconia composition comprises a fluorescent agent. The fluorescent agent is not particularly limited, and may be one, or two or more fluorescent agents capable of emitting fluorescence at a given wavelength of light. Examples of such fluorescent agents include those containing metallic elements. Examples of the metallic elements include Ga, Bi, Ce, Nd, Sm, Eu, Gd, Tb, Dy, and Tm. The fluorescent agent may contain only one of these metallic elements, or may contain two or more of these metallic elements. Preferred among these metallic elements are Ga, Bi, Eu, Gd, and Tm, more preferably Bi and Eu. Examples of the fluorescent agent include oxides, hydroxides, acetates, and nitrates of the metallic elements above.

The fluorescent agent may be, for example, $Y_2SiO_5$:Ce, $Y_2SiO_5$:Tb, $(Y,Gd,Eu)BO_3$, $Y_2O_3$:Eu, YAG:Ce, $ZnGa_2O_4$:Zn, or $BaMgAl_{10}O_{17}$:Eu.

The content of the fluorescent agent in the zirconia composition is not particularly limited, and may be appropriately adjusted according to factors such as the type of fluorescent agent, and the intended use of the zirconia sintered body. However, in view of considerations such as suitability as a dental prosthesis, the content of fluorescent agent is preferably 0.001 mass% or more, more preferably 0.005 mass% or more, even more preferably 0.01 mass% or more with respect to 100 mass% of zirconia contained in the zirconia composition, in terms of an oxide of a metallic element contained in the fluorescent agent. The content of fluorescent agent is preferably 1 mass% or less, more preferably 0.5 mass% or less, even more preferably 0.1 mass% or less in terms of an oxide of a metallic element contained in the fluorescent agent. When the content of fluorescent agent is at or above these lower limits, it is possible to provide fluorescence comparable to that of human natural teeth. When the content of fluorescent agent is at or below the foregoing upper limits, it is possible to reduce a decrease in translucency and mechanical strength.

A zirconia composition of the present invention may comprise a binder. Examples of the binder include polyvinyl alcohol, methyl cellulose, carboxymethyl cellulose, acrylic binders, wax binders, polyvinyl butyral, polymethyl methacrylate, and ethyl cellulose. For enhanced translucency, the binder content in a zirconia composition of the present invention is preferably 10 mass% or less, more preferably 5 mass% or less, even more preferably 3 mass% or less with respect to 100 mass% of zirconia.

[Production Method of Zirconia Composition]

Production Method of the zirconia composition of the present invention preferably comprises the step of producing zirconia particles, the step of producing stabilizer particles, and the step of producing a powder containing zirconia-based particles. In the following, particles containing a zirconia particle and a stabilizer particle capable of preventing a phase transformation of zirconia will be referred to as "zirconia-based particles" because of the sufficiently greater abundance of zirconia particles than stabilizer particles.

· Production Methods of Zirconia Particles and Stabilizer Particles

The preparation method for zirconia particles contained in a zirconia composition of the present invention is not particularly limited, and may be selected from methods, for example, such as the breakdown process, which involves pulverizing or crushing coarse particles into a fine powder, and the building-up process, which involves synthesis from atoms or ions through nucleation and growth. Below is an example of a zirconia particle preparation method. The method employed for preparing zirconia particles can similarly be applied to the preparation of stabilizer particles, unless specified otherwise.

The breakdown process may involve pulverization with, for example, a ball mill or a bead mill. The breakdown process can be employed as a zirconia particle production method. In view of enhancing the crystallinity of yttria to allow for easy adjustments of the half width of the stabilizer-derived peak within the desired range, the breakdown process is a preferred method of production of stabilizer particles. The breakdown process can yield particles of desired average particle diameters through pulverization of stabilizer particles. Preferably, microsize pulverization media are used for pulverization. For example, it is preferable to use 100 μm or smaller pulverization media.

In view of adjusting r1 and r2 to achieve the desired ΔL*(W-B), it is preferable to classify the zirconia particles obtained, following the pulverization of coarse particles. Known methods and devices can be used for the classification process. Examples of known methods include elutriation, which exploits the difference in sedimentation speed due to particle size-dependent dispersibility, and the centrifugation process may be expedited using a centrifuge. Examples of known devices include porous membranes (e.g., membrane filters with a pore size of 100 nm), and classifiers (wet classifiers, dry classifiers).

In view of facilitating the enhancement of the crystallinity of the zirconia composition and allowing for easier adjustment of the half width of the stabilizer-derived peak in XRD patterns to the desired ranges specified by the present invention, it is particularly preferable to employ a solid stabilizer (for example, yttria) as the raw material in a method of production of stabilizer particles.

Examples of the building-up process include:

the vapor-phase pyrolysis method, which involves the precipitation of oxides through the pyrolysis of oxoacid salts of metal ions or organometallic compounds with high vapor pressure during vaporization;

the vapor-phase reaction method, where synthesis occurs through a vapor-phase chemical reaction between a high-pressure gas of a metal compound and a reactant gas;

the evaporative concentration method, which involves vaporizing the raw materials by heating and then condensing the vapor into fine particles through rapid cooling in an inert gas at a predetermined pressure;

the melt method, which involves cooling and solidifying the melt into small droplets to form a powder;

the solvent evaporation method, which evaporates the solvent to increase the concentration in the liquid to a supersaturated state to cause precipitation; and

the precipitation method, which involves supersaturating the solute concentration through a reaction with a precipitant or hydrolysis, and precipitating poorly soluble compounds such as oxides and hydroxides through nucleation and growth processes.

The precipitation method can be further divided into the following methods:

the homogenous precipitation method, which involves the formation of a precipitant in the solution through a chemical reaction to eliminate local non-uniformity in precipitant concentration;

the coprecipitation method, which involves adding a precipitant to cause simultaneous precipitation of multiple metal ions coexisting in the solution;

the hydrolysis method, which produces oxides or hydroxides through hydrolysis from alcohol solutions such as metal salt solutions, and metal alkoxides; and

the solvothermal synthesis method, which produces oxides or hydroxides from high-temperature and high-pressure fluids.

The solvothermal synthesis method is subdivided into methods such as the hydrothermal synthesis method that utilizes water as a solvent, and the supercritical synthesis method that employs a supercritical fluid, such as water or carbon dioxide, as a solvent.

In the present invention, it is preferable not to employ the coprecipitation method with zirconia and the stabilizer in view of providing the desired average particle diameters (r1 and r2) for zirconia particles and stabilizer particles.

In view of enhancing the crystallinity of the zirconia composition, it is preferable not to produce stabilizer particles (for example, yttria particles) in a liquid phase. It is not possible to sufficiently enhance crystallinity when stabilizer particles are produced in a liquid phase. This prevents the half width of the stabilizer-derived peak in an XRD pattern to be confined within the desired ranges specified by the present invention.

In any of the building-up processes, it is preferable to accelerate the rate of precipitation to obtain finer zirconia particles. In view of providing the desired $\Delta L^*(W-B)$ and linear light transmittance, it is preferable to classify the zirconia particles obtained. Known methods and devices can be used for classification. Examples of known devices include porous membranes (e.g., membrane filters with a pore size of 100 nm), and classifiers (wet classifiers, dry classifiers).

The zirconium source in the building-up process may be, for example, nitrates, acetates, chlorides, or alkoxides. Specific examples of the zirconium source include zirconium oxychloride, zirconium acetate, and zirconyl nitrate.

When produced by a method such as the building-up process, the zirconia particles may be used in the form of a zirconia particle-containing slurry, without drying, in the production process of a powder containing zirconia-based particles, provided that the zirconia particles satisfy the desired range of average particle diameters. The slurry containing zirconia particles may be prepared using any methods. For example, the slurry may be one obtained through the breakdown process or building-up process, or may be a commercially available product.

The average particle diameters (r1 and r2) can be controlled through processes, for example, such as pulverization in a production method of a zirconia composition of the present invention. The zirconia and stabilizer may be separately pulverized into zirconia particles and stabilizer particles with desired average particle diameters (r1 and r2). Because simultaneous pulverization may facilitate the formation of a solid solution of the stabilizer due to the energy of pulverization, it is preferable to adopt a production method involving fewer mixing and pulverization. The pulverization method is not particularly limited, and may be media milling such as ball milling or bead milling, or media-less milling such as wet JET or dry JET milling.

As described above, the control of zirconia particles and stabilizer particles can be achieved through processes such as classification and pulverization, depending on their methods of production, ensuring that these particles attain the desired average particle diameters (r1 and r2).

In the pulverization process, additives may be incorporated to enhance pulverization efficiency and reduce the formation of a solid solution. Examples of the additives include dispersants, emulsifiers, antifoaming agents, and plasticizers.

Examples of the dispersants include ammonium polycarboxylates (e.g., triammonium citrate), ammonium polyacrylate, acrylic copolymer resins, acrylic acid ester copolymers, polyacrylic acid, bentonite, carboxymethyl cellulose, anionic surfactants (for example, polyoxyethylene alkyl ether phosphates such as polyoxyethylene lauryl ether phosphate), non-ionic surfactants, oleic glyceride, amine surfactants, and oligosaccharide alcohols.

Examples of the emulsifiers include alkyl ethers, phenyl ethers, sorbitan derivatives, and ammonium salts.

Examples of the antifoaming agents include alcohols, polyethers, polyethylene glycol, silicone, and waxes.

Examples of the plasticizers include polyethylene glycol, glycerin, propylene glycol, and dibutyl phthalic acid.

· Production Method of Zirconia-Based Particle-Containing Powder

A powder containing zirconia-based particles (a mixed powder) is obtained by mixing a zirconia particle and a stabilizer particle capable of preventing a phase transformation of zirconia. The method for mixing a zirconia particle and a stabilizer particle capable of preventing a phase transformation of zirconia is not particularly limited, and may be wet mixing or dry mixing, for example. As noted above, the zirconia particles may have a form of a zirconia particle-containing slurry, and the stabilizer particles may have a form of a stabilizer particle-containing slurry. Accordingly, certain embodiments include a method that involves mixing a zirconia particle-containing slurry and a stabilizer particle-containing slurry to obtain a slurry containing zirconia-based particles, and drying the zirconia-based particle-containing slurry to obtain a powder containing zirconia-based particles; and a method that involves mixing zirconia particles (powder) and a stabilizer particle-containing slurry to obtain a slurry containing zirconia-based particles, and drying the zirconia-based particle-containing slurry to obtain a powder containing zirconia-based particles.

The method for the preparation of a zirconia-based particle-containing powder is not particularly limited. However, for considerations such as the capability to produce a more uniform zirconia sintered body of superior properties, it is preferable that the zirconia-based particle-containing powder be obtained by drying the slurry containing zirconia-based particles. The slurry subjected to drying may additionally comprise a fluorescent agent, a colorant, or a translucency adjuster, individually or in any combination.

The drying method is not particularly limited, and may be, for example, atomization drying (spray drying), supercritical drying, freeze drying, hot-air drying, or vacuum drying. For considerations such as the capability to inhibit particle aggregation during drying and provide a denser zirconia sintered body, the preferred method is any one of atomization drying, supercritical drying, and freeze drying, more preferably atomization drying or supercritical drying, even more preferably atomization drying.

The zirconia-based particle-containing slurry subjected to drying may be a slurry containing water as a dispersion medium. However, for considerations such as the capability to inhibit particle aggregation during drying and provide a denser zirconia sintered body, the slurry is preferably one containing a dispersion medium other than water, such as organic solvents.

Examples of the organic solvents include:

alcohols such as methanol, ethanol, 1-propanol, 2-propanol, 1-butanol, 2-butanol, 2-methyl-2-propanol, 2-methoxyethanol, 2-ethoxyethanol, 2-(2-ethoxyethoxy)ethanol, diethylene glycol monobutyl ether, and glycerin;
ketones such as acetone, and methyl ethyl ketone;
ethers such as tetrahydrofuran, diethyl ether, diisopropyl ether, 1,4-dioxane, and dimethoxyethane (including modified ethers such as propylene glycol monomethyl ether acetate (commonly known as PGMEA), preferably ether-modified ethers and/or ester-modified ethers, more preferably ether-modified alkylene glycols and/or ester-modified alkylene glycols);
esters such as ethyl acetate, and butyl acetate;
hydrocarbons such as hexane and toluene; and
halogenated hydrocarbons such as chloroform, and carbon tetrachloride.

These organic solvents may be used alone, or two or more thereof may be used in combination. Considering both body safety and ease of removal, the organic solvent is preferably a water-soluble organic solvent. Specifically, the organic solvent is more preferably ethanol, 2-propanol, 2-methyl-2-propanol, 2-ethoxyethanol, 2-(2-ethoxyethoxy)ethanol, propylene glycol monomethyl ether acetate, acetone, or tetrahydrofuran.

When employing atomization drying in particular, it is preferable that the dispersion medium of the zirconia-based particle-containing slurry subjected to drying contain a liquid with a surface tension at 25°C of 50 mN/m or less because it enables the mitigation of particle aggregation during drying, and the production of a denser zirconia sintered body. In view of these considerations, the liquid has a surface tension of preferably 40 mN/m or less, more preferably 30 mN/m or less.

The surface tension at 25°C may have values presented in, for example, Handbook of Chemistry and Physics. For liquids that are not described in this handbook, the values presented in WO2014/126034 may be used. For liquids that are not described in either of these publications, the surface tension can be determined following a known measurement method, for example, such as the ring method or the Wilhelmy method. Preferably, the surface tension at 25°C is measured with the automatic surface tensiometer CBVP-Z manufactured by Kyowa Interface Science Co., Ltd., or SIGMA 702 manufactured by KSV INSTRUMENTS LTD.

The liquid may be an organic solvent having the foregoing ranges of surface tensions. The organic solvent may be any of the aforementioned organic solvents with the foregoing ranges of surface tensions. However, for considerations such as the capability to inhibit particle aggregation during drying and provide a denser zirconia sintered body, the organic solvent is preferably at least one selected from the group consisting of methanol, ethanol, 2-methoxyethanol, 1 ,4-dioxane, 2-ethoxyethanol, and 2-(2-ethoxyethoxy)ethanol, more preferably at least one selected from the group consisting of methanol, ethanol, 2-ethoxyethanol, and 2-(2-ethoxyethoxy)ethanol.

For considerations such as the capability to inhibit particle aggregation during drying and provide a denser zirconia sintered body, the liquid content in the dispersion medium is preferably 50 mass% or more, more preferably 80 mass% or more, even more preferably 95 mass% or more, particularly preferably 99 mass% or more.

A slurry employing a dispersion medium other than water can be obtained by replacing the dispersion medium of a slurry dispersed in water (hereinafter, also referred to as "aqueous slurry"). The method used to replace the dispersion medium is not particularly limited, and may be, for example, a method that removes water by distillation after adding a dispersion medium other than water (e.g., an organic solvent) to a slurry dispersed in water. For removal of water by distillation, the dispersion medium other than water may be distilled away with water, either partially or entirely. The addition of a dispersion medium other than water, and the removal of water by distillation may be repeated multiple times. As an alternative method, the dispersoid may be precipitated after adding a dispersion medium other than water to a slurry dispersed in water. Alternatively, the dispersion medium after replacement with a specific organic solvent in a slurry dispersed in water may be replaced with yet another organic solvent.

The fluorescent agent may be added after replacing the dispersion medium. However, for considerations such as the capability to provide a more uniform zirconia sintered body of even superior properties, it is preferable to add the fluorescent agent before replacing the dispersion medium. Similarly, when containing a colorant and/or a translucency adjuster in the slurry, these may be added after replacing the dispersion medium. However, for considerations such as the capability to provide a more uniform zirconia sintered body of even superior properties, it is preferable to add the colorant and/or translucency adjuster before replacing the dispersion medium.

The zirconia-based particle-containing slurry to be dried may be one that has been subjected to a dispersion process under heat and pressure, such as a reflux process or hydrothermal treatment. The zirconia-based particle-containing slurry to be subjected to the drying process may be one that has been subjected to a mechanical dispersion process with, for example, a roll mill, a colloid mill, a high-pressure jet disperser, an ultrasonic disperser, a vibration mill, a planetary mill, or a bead mill. The slurry may be subjected to only one of these processes, or two or more of these processes.

The zirconia-based particle-containing slurry to be dried may comprise one additional component or two or more additional components such as a binder, a dispersant, an emulsifier, an antifoaming agent, a pH adjuster, and a lubricant. By containing these components (particularly, a binder, a dispersant, or an antifoaming agent, for example), it may be possible to inhibit particle aggregation during drying, and obtain a denser zirconia sintered body.

Examples of the dispersant, emulsifier, and antifoaming agent include those exemplified for the additives in the pulverization process of the zirconia particle production method described above.

Examples of the pH adjuster include ammonia, ammonium salts (including ammonium hydroxides such as tetramethylammonium hydroxide), alkali metal salts, and alkali-earth metal salts.

Examples of the lubricant include polyoxyethylene alkylate ethers, and waxes.

For considerations such as the capability to inhibit particle aggregation during drying and provide a denser zirconia sintered body, the water content in the zirconia-based particle-containing slurry to be dried is preferably 3 mass% or less, more preferably 1 mass% or less, even more preferably 0.1 mass% or less. The water content can be measured with a Karl Fischer aquameter.

The drying conditions in the foregoing drying methods are not particularly limited, and known drying conditions may be appropriately adopted. When using an organic solvent as a dispersion medium, it is preferable that drying be performed in the presence of a nonflammable gas, more preferably nitrogen, in order to reduce the risk of explosion during drying.

In the case of supercritical drying, the supercritical fluid is not particularly limited, and may be, for example, water or carbon dioxide. However, the supercritical fluid is preferably carbon dioxide for considerations such as the capability to inhibit particle aggregation and provide a denser zirconia sintered body.

The zirconia-based particle-containing powder obtained in the manner described above can be used as a zirconia composition comprising a zirconia particle and a stabilizer particle capable of preventing a phase transformation

of zirconia. In the present invention, the zirconia composition may be formed into a molded body through a molding process.

The molded body is created by applying external force to a zirconia-based particle-containing powder. Because it has not undergone the firing process, the term "molded body" means a material where necking has not taken place between particles.

The molding process is not particularly limited. However, for considerations such as ease of production of a zirconia molded body of the present invention, and, in turn, a zirconia pre-sintered body and zirconia sintered body of the present invention, the molding process is preferably at least one of the following processes:

(i) slip casting of a slurry containing zirconia-based particles
(ii) gel casting of a slurry containing zirconia-based particles
(iii) press forming of a powder containing zirconia-based particles
(iv) molding of a composition containing zirconia-based particles and resin
(v) polymerization of a composition containing zirconia-based particles and a polymerizable monomer.

Preferably, the molding process is a process that includes molding of zirconia-based particles, a polyol, and a binder to obtain a zirconia molded body.

(i) Slip Casting

When the zirconia molded body is produced using a method that includes the step of slip casting a slurry containing zirconia-based particles, the slip casting method is not particularly limited to specific methods, and may be, for example, a method that dries the zirconia-based particle-containing slurry after pouring it in a mold.

For considerations such as ease of pouring the slurry into a mold, and increasing the reusability of the mold in addition to preventing excessive drying time, the content of the dispersion medium in the zirconia-based particle-containing slurry used is preferably 80 mass% or less, more preferably 50 mass% or less, even more preferably 20 mass% or less.

The slurry may be poured into a mold under ordinary pressure. However, in view of production efficiency, it is preferable to pour the slurry under applied pressure conditions. The mold used for slip casting is not particularly limited, and the mold may be, for example, a porous mold made of a material such as plaster, resin, or ceramic. Resin or ceramic porous molds are superior in terms of durability.

The zirconia-based particle-containing slurry used for slip casting may contain one additional component or two or more additional components, such as the binders, plasticizers, dispersants, emulsifiers, antifoaming agents, pH adjusters, and lubricants mentioned earlier.

(ii) Gel Casting

When a zirconia molded body is produced using a method that includes the step of gel casting a slurry containing zirconia-based particles, the gel casting method is not particularly limited to specific methods, and may be, for example, a method that dries a moist body shaped in a mold by gelling a slurry containing zirconia-based particles and a fluorescent agent.

For considerations such as preventing excessive drying time and reducing cracking during drying, the content of the dispersion medium contained in the zirconia-based particle-containing slurry used is preferably 80 mass% or less, more preferably 50 mass% or less, even more preferably 20 mass% or less.

The gelation may be achieved by, for example, adding a gelatinizer, or by adding and polymerizing a polymerizable monomer. The mold used is not particularly limited, and may be, for example, a porous mold made of a material such as plaster, resin, or ceramic, or a non-porous mold made of a material such as metal or resin.

The gelatinizer is not particularly limited, and may be, for example, a water-soluble gelatinizer. Specifically, preferred are agarose and gelatin, for example. The gelatinizer may be used alone, or two or more thereof may be used in combination. In view of considerations such as a reduction of cracking during sintering, the gelatinizer is used in an amount of preferably 10 mass% or less, more preferably 5 mass% or less, even more preferably 1 mass% or less based on the mass the slurry after the addition of gelatinizer.

The polymerizable monomer is not particularly limited, and may be, for example, 2-hydroxyethyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, propylene glycol mono(meth)acrylate, glycerol mono(meth)acrylate, erythritol mono(meth)acrylate, N-methylol(meth)acrylamide, N-hydroxyethyl(meth)acrylamide, or N,N-bis(2-hydroxyethyl)(meth)acrylamide. The polymerizable monomer may be used alone, or two or more thereof may be used in combination.

In view of considerations such as a reduction of cracking during sintering, the polymerizable monomer is used in an amount of preferably 10 mass% or less, more preferably 5 mass% or less, even more preferably 1 mass% or less based on the mass the slurry after the addition of polymerizable monomer.

When gelation is performed through polymerization of a polymerizable monomer, it is preferable to use a polymerization initiator for polymerization. The polymerization initiator is not particularly limited. Particularly preferred are photopolymerization initiators. A photopolymerization initiator can be appropriately selected from photopolymerization initiators used in industry, particularly photopolymerization initiators used in dentistry.

Specific examples of the photopolymerization initiators include (bis)acylphosphine oxides (including salts), thioxanthones (including salts such as quaternary ammonium salts), ketals, $\alpha$-diketones, coumarins, anthraquinones, benzoin alkyl ether compounds, and $\alpha$-aminoketone compounds. The photopolymerization initiators may be used alone, or two or more thereof may be used in combination. Preferred among these photopolymerization initiators is at least one selected from the group consisting of a (bis)acylphosphine oxide and an $\alpha$-diketone. With these photopolymerization initiators, it is possible to achieve polymerization (gelation) both in the ultraviolet region (including the near ultraviolet region) and the visible region. Specifically, polymerization (gelation) can sufficiently take place irrespective of whether the light source used is a laser such as an Ar laser or a He-Cd laser, or a lamp such as a halogen lamp, a xenon lamp, a metal halide lamp, a light emitting diode (LED), a mercury lamp, or a fluorescent lamp.

Examples of acylphosphine oxides in the (bis)acylphosphine oxides include 2,4,6-trimethylbenzoyldiphenylphosphine oxide (commonly known as TPO), 2,6-dimethoxybenzoyldiphenylphosphine oxide, 2,6-dichlorobenzoyldiphenylphosphine oxide, 2,4,6-trimethylbenzoylmethoxyphenylphosphine oxide, 2,4,6-trimethylbenzoylethoxyphenylphosphine oxide, 2,3,5,6-tetramethylbenzoyldiphenylphosphine oxide, benzoyl di(2,6-dimethylphenyl)phosphonate, sodium salts of 2,4,6-trimethylbenzoylphenylphosphine oxide, potassium salts of 2,4,6-trimethylbenzoyldiphenylphosphine oxide, and ammonium salts of 2,4,6-trimethylbenzoyldiphenylphosphine oxide.

Examples of bisacylphosphine oxides in the (bis)acylphosphine oxides include bis(2,6-dichlorobenzoyl)phenylphosphine oxide, bis(2,6-dichlorobenzoyl)-2,5-dimethylphenylphosphine oxide, bis(2,6-dichlorobenzoyl)-4-propylphenylphosphine oxide, bis(2,6-dichlorobenzoyl)-1-naphthylphosphine oxide, bis(2,6-dimethoxybenzoyl)phenylphosphine oxide, bis(2,6-dimethoxybenzoyl)-2,4,4-trimethylpentylphosphine oxide, bis(2,6-dimethoxybenzoyl)-2,5-dimethylphenylphosphine oxide, bis(2,4,6-trimethylbenzoyl)phenylphosphine oxide, and bis(2,3,6-trimethylbenzoyl)-2,4,4-trimethylpentylphosphine oxide. Other examples include compounds described in JP 2000-159621 A.

Preferred among these (bis)acylphosphine oxides are 2,4,6-trimethylbenzoyldiphenylphosphine oxide, 2,4,6-trimethylbenzoylmethoxyphenylphosphine oxide, bis(2,4,6-trimethylbenzoyl)phenylphosphine oxide, and sodium salts of 2,4,6-trimethylbenzoylphenylphosphine oxide.

Examples of the $\alpha$-diketones include diacetyl, benzyl, camphorquinone, 2,3-pentadione, 2,3-octadione, 9,10-phenanthrenequinone, 4,4'-oxybenzyl, and acenaphthenequinone. Preferred is camphorquinone, particularly in situations where a visible light source is used.

The zirconia-based particle-containing slurry used for gel casting may additionally contain one additional component or two or more additional components, such as the binders, plasticizers, dispersants, emulsifiers, antifoaming agents, pH adjusters, and lubricants mentioned earlier, as with the case of the slurry used for slip casting.

The method used to dry the shaped moist body is not particularly limited, and may be, for example, natural drying, hot-air drying, vacuum drying, drying by dielectric heating, drying by induction heating, or drying under constant temperature and humidity. These methods may be used alone, or two or more thereof may be used in combination. In view of considerations such as the capability to reduce cracking during drying, preferred are natural drying, drying by dielectric heating, drying by induction heating, and drying under constant temperature and humidity.

(iii) Press Forming

When the zirconia molded body is produced using a method that comprises the step of press forming a powder containing zirconia-based particles, the press forming method is not particularly limited to specific methods, and a known press forming machine can be used. Specific examples of the pressing forming method include uniaxial pressing. In order to increase the density of the zirconia molded body obtained, it is preferable that uniaxial pressing be followed by a cold isostatic pressing (CIP) process.

The zirconia-based particle-containing powder used for press forming may additionally contain one additional component or two or more additional components, such as the binders, plasticizers, dispersants, emulsifiers, antifoaming agents, pH adjusters, and lubricants mentioned earlier. These components may be added during the preparation of the powder.

(iv) Molding of Resin-Containing Composition

When the zirconia molded body is produced using a method that comprises the step of molding a composition containing zirconia-based particles and resin, the method used to mold the composition is not particularly limited to specific methods, and may be, for example, injection molding, cast molding, or extrusion molding. It is also possible to use additive fabrication techniques (such as 3D printing) to mold the composition, including, for example, fused deposition modeling (FDM), the inkjet method, and the powder/binder lamination method. Preferred among these molding methods are injection molding and cast molding, more preferably injection molding.

The resin is not particularly limited, and is preferably one that can serve as a binder. Specific examples of the resin include paraffin wax, polyvinyl alcohol, polyethylene, polypropylene, an ethylene-vinyl acetate copolymer, polystyrene, atactic polypropylene, methacrylic resin, and fatty acids such as stearic acid. These resins may be used alone, or two or more thereof may be used in combination.

The composition containing zirconia-based particles and resin may additionally contain one additional component or two or more additional components, such as the plasticizers, dispersants, emulsifiers, antifoaming agents, pH adjusters, and lubricants mentioned earlier.

(v) Polymerization of Composition Containing Polymerizable Monomer

By polymerizing a composition containing zirconia-based particles and polymerizable monomer, the polymerizable monomer in the composition can polymerize, allowing the composition to cure. When the zirconia molded body is produced using a method that comprises such a polymerization step, the method is not particularly limited to specific methods, and may be, for example, (a) a method by which a composition containing zirconia-based particles and polymerizable monomer is polymerized in a mold, or (b) stereolithography (SLA) using a composition containing zirconia-based particles and polymerizable monomer. The preferred method is (b), stereolithography. Stereolithography enables the zirconia molded body to have a shape corresponding to the shape desired for the final zirconia sintered body, at the time of its production. This makes stereolithography a potentially preferred method in certain situations, particularly when a zirconia sintered body of the present invention is used as a dental material such as a dental prosthesis.

The polymerizable monomer in the composition containing zirconia-based particles and polymerizable monomer is not particularly limited, and may be a monofunctional polymerizable monomer such as a monofunctional (meth)acrylate or a monofunctional (meth)acrylamide, or a polyfunctional polymerizable monomer such as a bifunctional aromatic compound, a bifunctional aliphatic compound, or a tri- or higher-functional compound. The polymerizable monomer may be used alone, or two or more thereof may be used in combination. Preferred for use are polyfunctional polymerizable monomers, particularly in situations where stereolithography is employed.

Examples of the monofunctional (meth)acrylate include:

(meth)acrylates having a hydroxyl group, such as 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, propylene glycol mono(meth)acrylate, glycerol mono(meth)acrylate, and erythritol mono(meth)acrylate;
alkyl (meth)acrylates such as methyl (meth)acrylate, ethyl (meth)acrylate, propyl (meth)acrylate, isopropyl (meth)acrylate, n-butyl (meth)acrylate, sec-butyl (meth)acrylate, t-butyl (meth)acrylate, isobutyl (meth)acrylate, n-hexyl (meth)acrylate, lauryl (meth)acrylate, cetyl (meth)acrylate, and stearyl (meth)acrylate;
alicyclic (meth)acrylates such as cyclohexyl (meth)acrylate, and isobornyl (meth)acrylate;
aromatic group-containing (meth)acrylates such as benzyl (meth)acrylate, and phenyl (meth)acrylate; and
(meth)acrylates having a functional group, such as 2,3-dibromopropyl (meth)acrylate, 3-(meth)acryloyloxypropyltrimethoxysilane, and

11-(meth)acryloyloxyundecyltrimethoxysilane.

Examples of the monofunctional (meth)acrylamide include (meth)acrylamide, N-(meth)acryloylmorpholine, N,N-dimethyl(meth)acrylamide, N,N-diethyl(meth)acrylamide, N,N-di-n-propyl(meth)acrylamide, N,N-di-n-butyl(meth)acrylamide, N,N-di-n-hexyl(meth)acrylamide, N,N-di-n-octyl(meth)acrylamide, N,N-di-2-ethylhexyl(meth)acrylamide, N-hydroxyethyl(meth)acrylamide, and N,N-bis(2-hydroxyethyl)(meth)acrylamide.

In view of excellent polymerizability, preferred among these monofunctional polymerizable monomers are (meth)acrylamide, more preferably N-(meth)acryloylmorpholine, N,N-dimethyl(meth)acrylamide, and N,N-diethyl(meth)acrylamide.

Examples of the bifunctional aromatic compound include (meth)acrylates such as 2,2-bis((meth)acryloyloxyphenyl)propane, 2,2-bis[4-(3-acryloyloxy-2-hydroxypropoxy)phenyl]propane, 2.2- bis[4-(2-hydroxy-3-methacryloyloxypropoxy)phenyl]propane (commonly known as Bis-GMA), 2,2-bis(4-(meth)acryloyloxyethoxyphenyl)propane, 2,2-bis(4-(meth)acryloyloxypolyethoxyphenyl)propane, 2,2-bis(4-(meth)acryloyloxydiethoxyphenyl)propane, 2,2-bis(4-(meth)acryloyloxytetraethoxyphenyl)propane, 2,2-bis(4-(meth)acryloyloxypentaethoxyphenyl)propane, 2,2-bis(4-(meth)acryloyloxydipropoxyphenyl)propane, 2-(4-(meth)acryloyloxydiethoxyphenyl)-2-(4-(meth)acryloyloxyethoxyphenyl)propane, 2-(4-(meth)acryloyloxydiethoxyphenyl)-2-(4-(meth)acryloyloxytriethoxyphenyl)propane, 2-(4-(meth)acryloyloxydipropoxyphenyl)-2-(4-(meth)acryloyloxytriethoxyphenyl)propane, 2,2-bis(4-(meth)acryloyloxypropoxyphenyl)propane, 2,2-bis(4-(meth)acry!oy!oxyisopropoxyphenyl)propane, and 1,4-bis(2-(meth)acryloyloxyethyl)pyromellitate. In view of excellent polymerizability and providing a zirconia molded body having superior mechanical strength, preferred are Bis-GMA, and 2,2-bis(4-(meth)acryloyloxypolyethoxyphenyl)propane. Preferred as 2,2-bis(4-(meth)acryloyloxypolyethoxyphenyl)propane is 2,2-bis(4-methacryloyloxypolyethoxyphenyl)propane (with an average of 2.6 moles of ethoxy group added; commonly known as D-2.6E).

Examples of the bifunctional aliphatic compound include (meth)acrylates such as glycerol di(meth)acrylate, ethylene glycol di(meth)acrylate, diethylene glycol di(meth)acrylate, triethylene glycol di(meth)acrylate, propylene glycol di(meth)acrylate, butylene glycol di(meth)acrylate, neopentyl glycol di(meth)acrylate, polyethylene glycol di(meth)acrylate, 1,3-butanediol di(meth)acrylate, 1,4-butanediol di(meth)acrylate, 1,6-hexanediol di(meth)acrylate, 2-ethyl-1,6-hexanediol di(meth)acrylate, 1,9-nonanediol di(meth)acrylate, 1,10-decanediol di(meth)acrylate, 1,2-bis(3-methacryloyloxy-2-hydroxypropoxy)ethane, 2,2,4-trimethylhexamethylenebis(2-carbamoyloxyethyl)dimethacrylate (commonly known as UDMA). In view of excellent polymerizability and providing a zirconia molded body having superior mechanical strength, preferred are triethylene glycol dimethacrylate (commonly known as TEGDMA), and 2,2,4-trimethylhexamethylenebis(2-carbamoyloxyethyl)dimethacrylate.

Examples of the tri- or higher-functional compound include (meth)acrylates such as trimethylolpropane tri(meth)acrylate, trimethylolethane tri(meth)acrylate, trimethylolmethane tri(meth)acrylate, pentaerythritol tri(meth)acrylate, pentaerythritol tetra(meth)acrylate, dipentaerythritol penta(meth)acrylate, N,N-(2,2,4-trimethylhexamethylene)bis[2-(aminocarboxy)propane-13-diol]tetra(meth)acr ylate, and 1,7-diacryloyloxy-2,2,6,6-tetra(meth)acryloyloxymethyl-4-oxaheptane. In view of excellent polymerizability and providing a zirconia molded body having superior mechanical strength, preferred are N,N-(2,2,4-trimethylhexamethylene)bis[2-(aminocarboxy)propane-13-diol]tetramethacryl ate, and 1,7-diacryloyloxy-2,2,6,6-tetraacryloyloxymethyl-4-oxaheptane.

In both methods (a) and (b), it is preferable that the composition be polymerized using a polymerization initiator, and that the composition additionally comprise a polymerization initiator. The polymerization initiator is not particularly limited. Particularly preferred are photopolymerization initiators. A photopolymerization initiator may be appropriately selected from photopolymerization initiators used in industry, preferably photopolymerization initiators used in dentistry. Specific examples of the photopolymerization initiators are no different from those mentioned above in the description of gel casting, and repetition is omitted.

The composition containing zirconia-based particles and polymerizable monomer may additionally contain one additional component or two or more additional components, such as the plasticizers, dispersants, emulsifiers, antifoaming agents, pH adjusters, and lubricants mentioned earlier.

When the zirconia molded body is produced by stereolithography using a composition containing zirconia-based particles and polymerizable monomer, the stereolithography method is not particularly limited to specific methods, and a known method may be appropriately selected for stereolithography. For example, it is possible to use a method that produces the desired zirconia molded body by successively forming layers in desired shapes through photopolymerization of a liquid composition with, for example, ultraviolet light or a laser, using a stereolithography device.

When the zirconia molded body is produced by stereolithography, it is preferable that the composition containing zirconia-based particles and polymerizable monomer have the highest possible content of zirconia-based particles, in view of considerations such as sinterability in a later step. Specifically, the content of the zirconia-based particles in the composition is preferably 20 mass% or more, more preferably 30 mass% or more, even more preferably 40 mass% or more, particularly preferably 50 mass% or more. In stereolithography, it is preferable for the viscosity of the composition to fall in a certain range, for reasons related to the principles of layer-to-layer formation. In this respect, the content of the zirconia-based particles in the composition is preferably 90 mass% or less, more preferably 80 mass% or less, even more preferably 70 mass% or less, particularly preferably 60 mass% or less. Adjusting the viscosity of the composition can be particularly important when implementing the constrained surface method, which involves curing layers by applying light through the bottom of a vat from its lower side to successively form layers of zirconia molded body, in order to enable the composition to form a new layer by smoothly flowing into the space between the bottom surface of the cured layer and the bottom of the vat after the cured layer is elevated by one layer thickness.

Specifically, the composition has a viscosity of preferably 20,000 mPa·s or less, more preferably 10,000 mPa·s or less, even more preferably 5,000 mPa·s or less in terms of a viscosity at 25°C. The viscosity is preferably 100 mPa·s or more. Because the composition tends to increase its viscosity with increasing content of zirconia particles, it is preferable to appropriately adjust the balance between zirconia particle content and viscosity in the composition, taking into consideration a balance between the rate of stereolithography and the precision of the zirconia molded body produced, depending on factors such as the capabilities of the stereolithography device used. The viscosity can be measured with an E-type viscometer.

In a method of production of a zirconia molded body of the present invention, the zirconia molded body may be subjected to a CIP process after a humidification process, in order to further improve the density of the zirconia molded body. When press forming is performed, the zirconia particle-containing powder may be subjected to press forming after a humidification process, before pressing the powder. Any known methods can be used for the humidification process, including a method that sprays water with a sprayer or the like, and a method that uses a constant humidity chamber or a constant temperature and humidity chamber. The amount of moisture increase after the humidification process is preferably higher than 2 mass%, more preferably higher than 3 mass%, even more preferably higher than 4 mass%, particularly preferably higher than 5 mass%, and is preferably 15 mass% or less, more preferably 13 mass% or less, even more preferably 11 mass% or less relative to the mass of the powder (powder before humidification process) and molded body before wetting, though the amount of moisture increase depends on factors such as the particle size of the zirconia particles and stabilizer particles contained. The amount of moisture increase by humidification process can be determined as a percentage by subtracting the mass of the powder and molded body before wetting from the mass of the wetted powder (powder after humidification process) and molded body, and dividing the difference by the mass of the powder and molded body before wetting.

[Zirconia Pre-Sintered Body]

Another embodiment of the present invention is, for example, a zirconia pre-sintered body comprising zirconia, and a stabilizer capable of preventing a phase transformation of zirconia, wherein:

at least a part of the stabilizer is not dissolved in zirconia as a solid solution,
the monoclinic crystal fraction $f_m$ represented by the mathematical formula (1) below is 50 to 98%, and
the stabilizer has a local abundance of 10 to 90 mol%,

$$f_m = I_{28}/(I_{28}+I_{30})*100 \qquad (1),$$

wherein $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

By using the zirconia pre-sintered body, a zirconia sintered body can be obtained that has reduced opalescent properties while exhibiting excellent translucency even after brief sintering.

The zirconia pre-sintered body can be a precursor (intermediate product) of a zirconia sintered body. In this specification, "zirconia pre-sintered body" refers to a state where zirconia particles have formed necks but have not been fully sintered. The shape of zirconia pre-sintered body is not particularly limited, and may be a block or disc shape, for example.

The zirconia pre-sintered body includes those that have undergone a molding process.

The zirconia pre-sintered body includes, for example, precursors of dental products (for example, crown-shaped prostheses) before sintering, created from pre-sintered zirconia discs processed with a CAD/CAM (Computer-Aided Design/Computer-Aided Manufacturing) system.

In a zirconia pre-sintered body of the present invention, the monoclinic crystal fraction $f_m$ means a fraction of the monoclinic crystal system in zirconia, calculated from formula (1), relative to the total amount of the crystal systems (monoclinic crystal system, tetragonal crystal system, and cubic crystal system) present in zirconia.

For example, the monoclinic crystal fraction $f_m$ can be calculated from the formula (1) above based on a peak in a powder X-ray diffraction (XRD) pattern by CuK$\alpha$ radiation.

In a zirconia pre-sintered body of the present invention, the monoclinic crystal fraction $f_m$ is 50% or more, preferably 55% or more, more preferably 60% or more, even more preferably 65% or more relative to the total amount of the monoclinic crystal system, tetragonal crystal system, and cubic crystal system. In view of facilitating the mitigation of opalescent properties in the sintered body after sintering, the monoclinic crystal fraction $f_m$ is 98% or less, preferably 94% or less, more preferably 91% or less, even more preferably 87% or less. The range of monoclinic crystal fractions $f_m$ may be any combination of these values. For example, the preferred range is 50 to 98%, more preferably 55 to 94%, even more preferably 60 to 91%, most preferably 65 to 87%. It is speculated that the monoclinic crystal fraction $f_m$ in the zirconia pre-sintered body also contributes to elevating the shrinkage temperature and reducing the sintering time (providing excellent translucency even after brief sintering).

The monoclinic crystal fraction $f_m$ in the zirconia pre-sintered body may be adjusted by the building-up process. Alternatively, the desired monoclinic crystal fraction $f_m$ can be attained in the zirconia pre-sintered body with the use of a zirconia composition containing a predetermined amount of zirconia particles (powder) of a monoclinic crystal system.

In an XRD pattern of the zirconia pre-sintered body, the presence of peaks derived from the stabilizer means the presence of a stabilizer that is not dissolved in zirconia as a solid solution in the zirconia pre-sintered body. A peak derived from the stabilizer is basically not observable in the XRD pattern when the stabilizer is fully dissolved as a solid solution. It is, however, possible, depending on the crystal state or other conditions of the stabilizer, that the stabilizer is not dissolved in zirconia as a solid solution even when the XRD pattern does not show peaks for stabilizers. When the predominant crystal system of zirconia is tetragonal and/or cubic and there is no peak attributed to the stabilizer in the XRD pattern, the stabilizer can be thought of having dissolved in zirconia as a solid solution for the most part, basically completely. Here, "predominant crystal system being tetragonal and/or cubic" means that the fraction of the tetragonal and/or cubic crystal system is 50% or more relative to the total amount of the crystal systems (monoclinic crystal system, tetragonal crystal system, and cubic crystal system) present in zirconia. In a zirconia pre-sintered body of the present invention, it is not required that the stabilizer is fully dissolved in zirconia as a solid solution.

In this specification, "stabilizer being dissolved as a solid solution" means that, for example, the elements (atoms) contained in the stabilizer are dissolved in zirconia as a solid solution.

The stabilizer in a zirconia pre-sintered body of the present invention may be the same stabilizer employed in the zirconia composition. Preferred is yttria because yttria, when combined with configurations such as monoclinic crystal fraction $f_m$, results in a zirconia sintered body that exhibits excellent translucency even after brief sintering, as well as normal sintering. The stabilizer content in a zirconia pre-sintered body of the present invention is the same as that in the zirconia composition. For example, the stabilizer content is preferably 2 to 9 mol%, more preferably 3 to 8 mol% relative to the total mole of zirconia and stabilizer.

The formation of a solid solution irreversibly proceeds under external energy. The formation of a solid solution advances, and the monoclinic crystal fraction $f_m$ decreases with the progression of solid solution formation. This becomes more apparent with larger r1, smaller r2, higher yttria content, or higher pre-sintering temperature (described below).

The formation of a solid solution proceeds not only by the heat energy of pre-sintering but also in the process of mixing zirconia particles and stabilizer particles, the process of simultaneously crushing these particles, and/or the process of drying the particles, as will be described. The monoclinic crystal fraction $f_m$ decreases with such progression of solid solution formation.

Because a zirconia pre-sintered body fabricated solely from zirconia particles forming a solid solution with the stabilizer shows a monoclinic crystal fraction $f_m$ of less than 10%, it is required in a zirconia pre-sintered body of the present invention that at least a part of the stabilizer is not dissolved in zirconia as a solid solution.

The stabilizer content in a zirconia pre-sintered body of the present invention can be measured using techniques, for example, such as inductively coupled plasma (ICP) emission spectral analysis, and X-ray fluorescence analysis. In a zirconia pre-sintered body of the present invention, the preferred content of stabilizer (preferably, yttria) is 2.0 to 9.0 mol%, more preferably 3.0 to 8.0 mol% relative to the total mole of zirconia and stabilizer.

A stabilizer content of less than 2.0 mol% poses an issue of insufficient translucency in the zirconia sintered body. A stabilizer content of more than 9.0 mol% is not preferable because it leads to a decrease in the monoclinic crystal fraction $f_m$ of the zirconia pre-sintered body, resulting in reduced translucency due to the crystalline structure.

In a zirconia pre-sintered body of the present invention, it is preferable to have localized dispersion of the stabilizer because it adequately diminishes the regularity of the structure after sintering, leading to the production of a sintered body with high translucency and low opalescent properties. The term "localized" as used in the present invention denotes a circular equivalent range of about 10 nm in diameter. Having both stabilizer and zirconia within this range is preferable because the crystalline structure remains small after sintering, and enhances the translucency.

In a zirconia pre-sintered body of the present invention, when examination of the formulation of stabilizer-derived particles is conducted locally, elements other than oxygen atoms (for example, yttrium element) constituting the oxide of the stabilizer is detected inside the stabilizer-derived particles. For example, when the stabilizer contained in a zirconia pre-sintered body of the present invention is yttria, local examination of the formulation of yttria-derived particles detects a yttrium element inside the yttria-derived particles. The yttria-derived particles contain trace amounts of non-yttria elements such as zirconia, though yttria represents the major constituent. When the compositional distribution of the zirconia pre-sintered body is observed, the local content (abundance) of elements other than oxygen atoms (for example, yttrium element) constituting the oxide of the stabilizer in stabilizer-derived particles (preferably, yttria-derived particles) is preferably 10 mol% or more, more preferably 15 mol% or more, even more preferably 20 mol% or more. Containing these elements in an amount below 10 mol% is not preferable because it indicates a state where most of the zirconia and stabilizer have formed a solid solution, resulting in a sintered body with almost no particles larger than 100 nm after sintering (meaning an orderly arranged crystalline structure), leading to high opalescent properties. The local content of elements (other than oxygen atoms) constituting the oxide of the stabilizer is preferably 90 mol% or less, more preferably 85 mol% or less, even more preferably 80 mol% or less. A local content exceeding 90 mol% is not preferable because it indicates a state where the zirconia and stabilizer have hardly formed a solid solution, leading to an increase in regions with small stabilizer content outside the stabilizer particles during sintering, resulting in increased diffusion in both amount and distance. This results in a crystalline structure with an excessive number of particles larger than 100 nm after sintering, diminishing translucency $\Delta L_1$ and $L_2$. The range of the local contents of the aforementioned elements may be any combination of these values. For example, the preferred range is 10 to 90 mol%, more preferably 15 to 85 mol%, even more preferably 20 to 80 mol%. A local content of 10 to 90 mol% is preferable because it leads to enhanced translucency after sintering, and a zirconia sintered body with low opalescent properties.

In a zirconia pre-sintered body of the present invention, the local elemental composition can be confirmed with, for example, an electron microscope such as a transmission electron microscope or scanning electron microscope. The spatial resolution of the electron microscope can be adjusted, for example, to be smaller than the average primary particle diameter by setting various conditions. The conditions may involve, for example, configuring the electron microscope in point analysis mode, and setting a low acceleration voltage (for example, 100 kV or less, or 10 kV or less). This reduces the diffusible area of the electron beam into the sample, decreasing the area where characteristics X-rays, proportional to the element's quantity, are produced, enabling more precise measurements. Another condition may involve, for example, placing the analysis point close to the particle's center of gravity rather than its periphery. Yet another condition may involve employing an energy-dispersive X-ray analyzer or wavelength-dispersive X-ray analyzer as a detector. Even more precise measurements are possible with a wavelength-dispersive detector, for example.

In a zirconia pre-sintered body of the present invention, the local elemental composition is influenced by the extent of solid solution of the stabilizer with respect to zirconia. The particle diameters specified above in conjunction with the zirconia composition are preferable because, for example, a smaller primary particle diameter of the stabilizer in the composition facilitates the formation of a solid solution of the stabilizer with zirconia, whereas a larger primary particle diameter creates difficulty in forming a solid solution with zirconia. The formation of a solid solution of the stabilizer with zirconia proceeds also during the mixing and pulverization process, or under the energy of debinding or pre-sintering, facilitating the diffusion of substances. It is therefore preferable to select an appropriate production method.

Concerning the opalescent properties, it is preferable in a zirconia pre-sintered body of the present invention that the OP value calculated from the mathematical formula (2) below for a sintered body of 1.2 mm thickness after 120 minutes of sintering at 900 to 1,400°C be less than 15, more preferably 10 or less, even more preferably 7 or less, in view of the appearance of the dental material. If the OP value is 15 or more, there is a potential risk of the material appearing to exhibit a specific color. The opalescent properties of the 1.2-mm thick sintered body may represent a value after 120 minutes of sintering at 1,300°C.

The opalescent properties represent an OP value calculated from the following mathematical formula (2) after measuring transmitted light and reflected light using the F11 illuminant of the spectrophotometer CM-3610A manufactured by Konica Minolta Japan.

[Math. 3]

$$\text{OP value} = \sqrt{\left(a*_{\text{transmission}} - a*_{\text{reflection}}\right)^2 + \left(b*_{\text{transmission}} - b*_{\text{reflection}}\right)^2} \tag{2}$$

wherein $a*_{\text{transmission}}$ and $b*_{\text{transmission}}$ represent the color coordinates of L*a*b* color system for transmitted light, and $a*_{\text{reflection}}$ and $b*_{\text{reflection}}$ represent the color coordinates of L*a*b* color system for reflected light.

In view of sufficient aesthetics in the dental material, it is preferable in a zirconia pre-sintered body of the present invention that a sintered body of 1.2 mm thickness after 120 minutes of sintering at 900 to 1,400°C have a ΔL*(W-B) of preferably 5 or more. If ΔL*(W-B) is less than 5, it may result in a strong white color, and a sufficiently transparent look may not be achievable. ΔL*(W-B) means the difference between the lightness (L*) against a white background and the lightness (L*) against a black background. Specifically, it means the difference between the L* value of a 1.2 mm-thick zirconia sintered body against a white background, and the L* value of the same zirconia sintered body against a black background. The L* value is an L* value in the chromaticity (color space) of the L*a*b* color system (JIS Z 8781-4:2013). The white background means the white part of the hiding-power test paper described in JIS K 5600-4-1:1999, Part 4, Section 1, and the black background means the black part of the hiding-power test paper. A ΔL*(W-B) can be measured using, for example, the F11 illuminant of the spectrophotometer CM-3610A manufactured by Konica Minolta Japan.

In a zirconia pre-sintered body of the present invention, it is preferable that a first translucency $\Delta L_1*(W\text{-}B)$ of a first sintered body fabricated by 120 minutes of sintering at 1,300°C, and a second translucency $\Delta L_2*(W\text{-}B)$ of a second sintered body fabricated by 10 minutes of sintering at 1,300°C satisfy the relationship of the mathematical formula (3) below. By satisfying the specified range, sufficient aesthetics can be maintained in the dental material even when a shorter sintering time is employed for the fabrication of the sintered body. The first and second translucencies are as described in "Measurement of ΔL*(W-B) of Zirconia Sintered Body" in the EXAMPLES section below.

$$\Delta L_2*(W\text{-}B)/\Delta L_1*(W\text{-}B) \geq 0.85 \tag{3}$$

In view of avoiding a decrease in translucency ΔL*(W-B), it is preferable in a zirconia pre-sintered body of the present invention that a sintered body after 120 minutes of sintering at 900 to 1,400°C have a number-based particle size distribution with at least one peak top within a particle size (crystal grain size) range of 70 nm to 100 nm. In view of reducing the regularity of the crystalline structure and diminishing opalescent properties after sintering, a certain preferred embodiment is, for example, a zirconia pre-sintered body having a number-based particle size distribution with two or more peaks. An example is a zirconia pre-sintered body that, after sintering, shows a first peak top (hereinafter, also referred to as "primary peak top") occurring within a particle size (crystal grain size) range of 70 nm to 100 nm, and a second peak top occurring within a particle size range exceeding 100 nm in a number-based particle size distribution, when it has two peaks. The number-based particle size distribution can be evaluated using the method described in "Measurement of Crystal Grain Size Distribution in Zirconia Sintered Body" in the EXAMPLES section below. In this specification, "crystal grain size" means the particle diameter of a single particle measured by the method described in "Measurement of Crystal Grain Size Distribution in Zirconia Sintered Body" in the EXAMPLES section below.

In a zirconia pre-sintered body of the present invention, the fraction of particles with a particle diameter of more than 100 nm is preferably 3% or more, more preferably 5% or more in the crystal grain size distribution (number-based) of a sintered body after 120 minutes of sintering at 900 to 1,400°C. A smaller OP value can be achieved when the fraction of such particles is 3% or more. The fraction of particles exceeding 100 nm is preferably 15% or less, more preferably 12% or less. The translucency may decrease when the fraction exceeds 15%. The fraction range may be any combination of these values. For example, the fraction of particles with a particle diameter exceeding 100 nm is preferably 3 to 15%, more preferably 5 to 12%. The measurement method of crystal grain size in a sintered body sintered at 900 to 1,400°C is as described in "Measurement of Crystal Grain Size Distribution in Zirconia Sintered Body" in the EXAMPLES section below.

A certain preferred embodiment is, for example, a zirconia pre-sintered body having a number-based particle size distribution with at least one peak top within a particle size range of 70 nm to 100 nm in a sintered body after 120 minutes of sintering at 900 to 1,400°C, and comprising 3 to 15% of particles with a particle diameter exceeding 100 nm in the sintered body, in addition to any of the foregoing configurations (for example, a zirconia pre-sintered body comprising zirconia, and a stabilizer capable of preventing a phase transformation of zirconia, and in which at least a part of the stabilizer is not dissolved in zirconia as a solid solution, the monoclinic crystal fraction $f_m$ represented by mathematical formula (1) is 50 to 98%, and the stabilizer has a local abundance of 10 to 90 mol% in particles derived from the stabilizer).

[Production Method of Zirconia Pre-Sintered Body]

Another embodiment of the present invention is, for example, a zirconia pre-sintered body production method that uses the zirconia composition. A specific example is a zirconia pre-sintered body production method comprising the step of firing (pre-sintering) the zirconia composition at 200 to 900°C. For example, a zirconia pre-sintered body is obtained by a method whereby the zirconia composition is fired (pre-sintered) at 200 to 900°C to remove organic materials, allowing a desired quantity of stabilizer to dissolve in zirconia as a solid solution, and causing the primary particles to undergo necking.

The pre-sintering temperature for the production of a zirconia pre-sintered body of the present invention is preferably 200°C or more, more preferably 300°C or more, even more preferably 400°C or more. A pre-sintering temperature of 200°C or more allows for removal of organic materials, enabling the adverse effects of organic materials to be conveniently avoided in the subsequent sintering process. The pre-sintering temperature is preferably 900°C or less, more preferably 700°C or less, even more preferably 600°C or less. A pre-sintering temperature of 900°C or less reduces a decrease in monoclinic crystal fraction $f_m$ due to solid solution, and provides outstanding translucency in a short time period in the subsequent sintering process. The range of pre-sintering temperatures may be any combination of these temperatures. For example, the pre-sintering temperature is preferably 200 to 900°C, more preferably 300 to 700°C, even more preferably 400 to 600°C.

The pre-sintering time for the production of a zirconia pre-sintered body of the present invention is preferably 30 minutes or more, more preferably 120 minutes or more. A pre-sintering time of 120 minutes or more is preferable in terms of removing organic materials, and preventing their adverse effects in the subsequent sintering process. The pre-sintering time is preferably 360 minutes or less, more preferably 240 minutes or less. A pre-sintering time of 240 minutes or less is preferable in terms of reducing a decrease in monoclinic crystal fraction $f_m$ due to solid solution, decreasing the diffusion distance of the stabilizer, and thereby providing outstanding translucency in a short time period in the subsequent sintering process. The range of pre-sintering periods may be any combination of these values. For example, the pre-sintering time is preferably 30 to 360 minutes, more preferably 120 to 240 minutes.

[Zirconia Sintered Body]

The following describes a zirconia sintered body of the present invention.

A zirconia sintered body of the present invention can be produced using the zirconia composition or zirconia pre-sintered body. Specifically, a zirconia sintered body of the present invention is obtained by, for example, sintering the zirconia composition or zirconia pre-sintered body. Here, a zirconia sintered body means a fully sintered state.

A zirconia sintered body of the present invention comprises zirconia, and a stabilizer capable of preventing a phase transformation of zirconia, and the stabilizer content is 2 to 9 mol% relative to the total mole of zirconia and stabilizer. The stabilizer in a zirconia sintered body of the present invention may be the same stabilizer as that in the zirconia composition. In view of translucency, yttria is preferred. A certain preferred embodiment is, for example, a zirconia sintered body in which the yttria content is 2 to 9 mol% relative to the total mole of zirconia and stabilizer. A zirconia sintered body of the present invention may have the same stabilizer (preferably, yttria) content as the stabilizer content in the zirconia composition. For example, the stabilizer content is preferably 2 to 9 mol%, more preferably 3 to 8 mol% relative to the total mole of zirconia and stabilizer. In view of obtaining sufficient translucency, the yttria content is preferably 2 to 9 mol%. A sufficient mechanical strength can be achieved with a yttria content of 9 mol% or less. For considerations such as providing a zirconia sintered body having even superior translucency and mechanical strength, the yttria content in the zirconia sintered body is preferably 3.0 mol% or more, more preferably 4.0 mol% or more, and is preferably 8.0 mol% or less, more preferably 7.0 mol% or less. The yttria content can be measured using techniques, for example, such as inductively coupled plasma (ICP) emission spectral analysis, and X-ray fluorescence analysis.

A zirconia sintered body of the present invention has a ΔL*(W-B) of 5 or more in a sintered body of 1.2 mm thickness. If ΔL*(W-B) is less than 5, it may result in a strong white color, and a sufficiently transparent look is not achievable. In view of sufficient aesthetics in the dental material, ΔL*(W-B) is preferably 5 or more. The measurement method of ΔL*(W-B) in a zirconia sintered body is as described in the EXAMPLES section below.

A zirconia sintered body of the present invention has an OP value of less than 15 as calculated from the mathematical formula (2) above in a sintered body of 1.2 mm thickness. An OP value of 15 or more is not preferable as it results in the presentation of a specific color. In view of the appearance of the dental material, the OP value is preferably 10 or less, more preferably 7 or less. The OP value, for example, can be calculated from the mathematical formula (2) above after measuring transmitted light and reflected light using the F11 illuminant of the spectrophotometer CM-3610A manufactured by Konica Minolta Japan.

As a rule, zirconia sintered bodies have optical properties such as translucency and opalescent properties. In a zirconia sintered body of the present invention, enhanced translucency occurs when the crystal grain size is smaller than the wavelengths in the visible light region. This also reduces scattering, leading to improved linear light transmittance. When the crystal grain size is merely smaller than the wavelength of the visible light region, opalescent properties arise from the structure, resulting in a colored appearance and a deterioration of overall appearance. The crystal grain size of the sintered body in the present invention refers to the particle diameter of the crystalline structure inherent to the zirconia sintered body.

In view of preventing a decrease in translucency ΔL*(W-B), it is preferable that a zirconia sintered body of the present invention have a number-based particle size distribution with at least one peak top in the particle size range of 70 nm to 100 nm.

In view of reducing the regularity of the crystalline structure of the sintered body and diminishing opalescent properties, a certain preferred embodiment is, for example, a zirconia sintered body having a number-based particle size distribution with two or more peak tops in the foregoing range. An example is a zirconia sintered body that shows two peak tops (bimodal) in the foregoing range. The number-based particle size distribution can be evaluated using the method described in "Measurement of Crystal Grain Size Distribution in Zirconia Sintered Body" in the EXAMPLES section below.

In view of improving ΔL*(W-B), a zirconia sintered body of the present invention has an average crystal grain size of 100 nm or less.

In this specification, "average crystal grain size" means the arithmetic average diameter in a number-based particle size distribution as measured by the method described in "Measurement of Crystal Grain Size Distribution in Zirconia Sintered Body" in the EXAMPLES section below.

In view of diminishing opalescent properties, the fraction of particles with a particle diameter (crystal grain size) exceeding 100 nm in a crystal grain size distribution (number-based particle size distribution) is preferably 3% or more, more preferably 5% or more. The OP value can be decreased when the fraction of such particles is 3% or more. The fraction of particles with a particle diameter exceeding 100 nm is preferably 15% or less, more preferably 12% or less. The translucency may decrease when the fraction is higher than 15%. The fraction range may be any combination of these values. For example, the fraction of particles with a particle diameter exceeding 100 nm in the crystal grain size distribution of the zirconia sintered body is preferably 3 to 15%, more preferably 5 to 12%.

A zirconia sintered body of the present invention may comprise a fluorescent agent. The zirconia sintered body shows fluorescence by comprising a fluorescent agent. The type of fluorescent agent is not particularly limited, and a fluorescent agent with the capability to emit fluorescence in response to light of a given wavelength can be used alone, or two or more of such fluorescent agents may be used. Examples of such fluorescent agents include those containing metallic elements. Examples of the metallic elements include Ga, Bi, Ce, Nd, Sm, Eu, Gd, Tb, Dy, and Tm. The fluorescent agent may contain one of such metallic elements alone, or may contain two or more of such metallic elements. For considerations such as enhancement of the effectiveness of the present invention, preferred among these metallic elements are Ga, Bi, Eu, Gd, and Tm, more preferably Bi and Eu. Examples of the fluorescent agent used when producing a zirconia sintered body of the present invention include oxides, hydroxides, acetates, and nitrates of the metallic elements above.

The fluorescent agent may be, for example, $Y_2SiO_5$:Ce, $Y_2SiO_5$:Tb, (Y,Gd,Eu)BO$_3$, $Y_2O_3$:Eu, YAG:Ce, $ZnGa_2O_4$:Zn, or BaMgAl$_{10}$O$_{17}$:Eu.

The content of the fluorescent agent in the zirconia sintered body is not particularly limited, and can be appropriately adjusted according to factors such as the type of fluorescent agent, or intended use of the zirconia sintered body. In view of considerations such as suitability in dental prosthesis applications, the content of fluorescent agent is preferably 0.001 mass% or more, more preferably 0.005 mass% or more, even more preferably 0.01 mass% or more in terms of an oxide of a metallic element contained in the fluorescent agent, with respect to 100 mass% of zirconia contained in the zirconia sintered body. The content of fluorescent agent is preferably 1 mass% or less, more preferably 0.5 mass% or less, even more preferably 0.1 mass% or less in terms of an oxide of a metallic element contained in the fluorescent agent. When the content of fluorescent agent is at or above the foregoing lower limits, the fluorescence can be comparable to that of human natural teeth. When the content of fluorescent agent is at or below the foregoing upper limits, it is possible to reduce a decrease in translucency and mechanical strength.

A zirconia sintered body of the present invention may comprise a colorant. By comprising a colorant, the zirconia sintered body becomes a colored zirconia sintered body. The type of colorant is not particularly limited, and the colorant may be a known pigment commonly used to color ceramics, or a known dental liquid colorant. For example, the colorant may be one containing a metallic element. Specific examples include oxides containing metallic elements such as iron, vanadium, praseodymium, erbium, chromium, nickel, and manganese, and composite oxides or salts thereof. It is also possible to use commercially available colorants. Examples of commercially available colorant products include the Prettau Colour Liquid manufactured by Zirkonzahn. The zirconia sintered body may comprise one colorant, or two or more colorants.

The colorant content in the zirconia sintered body is not particularly limited, and may be appropriately adjusted according to factors such as the type of colorant, and intended use of the zirconia sintered body. In view of considerations such as suitability in dental prosthesis applications, the colorant content is preferably 0.001 mass% or more, more preferably 0.005 mass% or more, even more preferably 0.01 mass% or more in terms of an oxide of a metallic element contained in the colorant, with respect to 100 mass% of zirconia contained in the zirconia sintered body. The colorant content is preferably 5 mass% or less, more preferably 1 mass% or less, even more preferably 0.5 mass% or less in terms of an oxide of a metallic element contained in the colorant. The colorant content may be 0.1 mass% or less, or 0.05 mass% or less.

With the present invention, a zirconia sintered body having excellent linear light transmittance can be obtained. A zirconia sintered body of the present invention may comprise a translucency adjuster, in order to adjust the translucency in the zirconia sintered body. Specific examples of the translucency adjuster include aluminum oxide, titanium oxide, silicon dioxide, zircon, lithium silicate, and lithium disilicate. The zirconia sintered body may comprise one translucency adjuster, or two or more translucency adjusters.

The content of the translucency adjuster in the zirconia sintered body is not particularly limited, and may be appropriately adjusted according to factors such as the type of translucency adjuster, and intended use of the zirconia sintered body. In view of considerations such as suitability in dental prosthesis applications, the content of translucency adjuster is preferably 0.1 mass% or less with respect to 100 mass% of zirconia contained in the zirconia sintered body.

[Production Method of Zirconia Sintered Body]

A zirconia sintered body production method of the present invention is, for example, a method that uses a zirconia composition of the present invention (for example, a molded body). The zirconia sintered body production method is preferably a method comprising the step of sintering the zirconia composition at 900 to 1,400°C under ordinary pressure.

Another embodiment is, for example, a zirconia sintered body production method that uses a zirconia pre-sintered body of the present invention. The production method is preferably a method comprising the step of sintering the zirconia pre-sintered body at 900 to 1,400°C under ordinary pressure.

The production method enables easy production of a zirconia sintered body of the present invention that exhibits both excellent mechanical strength and translucency, and outstanding linear light transmittance.

A zirconia sintered body of the present invention can be produced by sintering a zirconia composition of the present invention under ordinary pressure, or by sintering a zirconia pre-sintered body of the present invention under ordinary pressure.

Preferably, the sinterable temperature (for example, highest sintering temperature) conditions are chosen to achieve maximum translucency and minimum opalescent properties in the zirconia sintered body, regardless of whether the sintered body is produced by sintering a zirconia composition of the present invention (for example, a molded body) or a zirconia pre-sintered body of the present invention. In view of considerations such as ease of obtaining the intended zirconia sintered body, the sinterable temperature is preferably 900°C or more, more preferably 1,000°C or more, even more preferably 1,050°C or more under ordinary pressure, and is preferably 1,400°C or less, more preferably 1,350°C or less, even more preferably 1,300°C or less under ordinary pressure. Sintering can sufficiently proceed when the sinterable temperature is at or above the foregoing lower limits, enabling easy production of a dense sintered body. When the sinterable temperature is at or below the foregoing upper limits, it is possible to easily obtain a zirconia sintered body having a crystal grain size within the preferred ranges of the present invention while inhibiting deactivation of the fluorescent agent.

The sintering time is not particularly limited, regardless of whether the sintered body is produced by sintering a zirconia composition of the present invention (for example, a molded body) or a zirconia pre-sintered body of the present invention. However, for considerations such as enabling efficient and stable production of the intended zirconia sintered body with good productivity, the holding time at the sinterable temperature (for example, the highest sintering temperature) is preferably less than 120 minutes, more preferably 90 minutes or less, even more preferably 75 minutes or less, yet more preferably 60 minutes or less, particularly preferably 45 minutes or less, most preferably 30 minutes or less. The holding time is preferably 1 minute or more, more preferably 5 minutes or more, even more preferably 10 minutes or more.

The production method enables a shorter sintering time to be employed for the preparation of the sintered body without causing a decrease in the translucency and strength of the zirconia sintered body prepared, regardless of whether the sintered body is produced by sintering a zirconia composition of the present invention (for example, a molded body) or a zirconia pre-sintered body of the present invention. Particularly, it is possible to decrease the holding time at the highest sintering temperature for preparing the sintered body (brief sintering). This enhances production efficiency, and when a zirconia pre-sintered body of the present invention is used for dental products, the patient can experience less time-related stress because it takes a shorter time before a treatment can be started with a dental product after its dimensions are determined and the product is milled for the treatment. It is also possible to reduce the energy cost.

In the sintering process, the holding time at the sinterable temperature (for example, the highest sintering temperature) may be, for example, 25 minutes or less, 20 minutes or less, or 15 minutes or less.

Preferably, the rate of temperature increase and the rate of temperature decrease in the sintering process are set so as to reduce the time required for the sintering process. For example, the rate of temperature increase may be set so that the highest sintering temperature is reached in the shortest possible time, depending on the capabilities of the furnace. The rate of temperature increase to the highest sintering temperature may be, for example, 10°C/min or more, 50°C/min or more, 100°C/min or more, 120°C/min or more, 150°C/min or more, or 200°C/min or more. Preferably, the rate of temperature decrease is set to a rate that does not cause defects, such as cracks, in the sintered body. For example, the sintered body may be allowed to cool at room temperature after the heating is finished.

In the present invention, a sintering furnace can be used for sintering. The type of sintering furnace is not particularly limited, and may be a sintering furnace used in industry, for example, such as an electric furnace or debinding furnace. Specifically, when the intended use is dental materials, it is possible to use a dental porcelain furnace, which involves a relatively low sinterable temperature (for example, highest sintering temperature), aside from conventional dental sintering furnaces for zirconia.

A zirconia sintered body of the present invention has both high translucency and low opalescent properties. In view of providing excellent translucency even after brief sintering, it is preferable in a zirconia sintered body of the present invention that a first translucency $\Delta L_1^*(W\text{-}B)$ of a first sintered body fabricated by 120 minutes of sintering at 1,300°C, and a second translucency $\Delta L_2^*(W\text{-}B)$ of a second sintered body fabricated by 10 minutes of sintering at 1,300°C satisfy the relationship of the mathematical formula (3) below. The first and second translucencies are as described in "Measurement of $\Delta L^*(W\text{-}B)$ of Zirconia Sintered Body" in the EXAMPLES section below.

$$\Delta L_2^*(W\text{-}B)/\Delta L_1^*(W\text{-}B) \geq 0.85 \qquad (3)$$

A zirconia sintered body of the present invention can be produced with ease, even without a HIP process. However, the translucency and mechanical strength can further improve when a HIP process follows the sintering performed under ordinary pressure.

[Uses of Zirconia Sintered Body]

A zirconia sintered body of the present invention is not limited to particular uses.

However, because a zirconia sintered body of the present invention excels in translucency and linear light transmittance, a zirconia sintered body of the present invention is particularly suited for applications such as dental prostheses and other dental materials, and is highly useful not only as a dental prosthesis used for the cervical region but also as a dental prosthesis used for the occlusal surface of a posterior tooth, or the incisal region of a front tooth.

Particularly, a zirconia sintered body of the present invention is preferred for use as a dental prosthesis used for the incisal region of a front tooth.

EXAMPLES

The present invention is described below in greater detail using Examples and Comparative Examples. It is to be noted, however, that the present invention is not limited by the following. The measurement methods are as follows.

<Measurement Method of Average Primary Particle Diameter of Zirconia and Stabilizer in Zirconia Composition>

Images of zirconia particles and/or stabilizer particles were captured with a transmission electron microscope (TEM). From the area of each particle, the diameter of an equivalent circle (the diameter of a true circle with the same area as the particle) was calculated for arbitrarily selected 100 particles in the captured images. The average primary particle diameter was then determined by taking an average value of the circle equivalent diameters of these 100 particles.

$$R = 2(S/\pi)^{(1/2)}$$

where S represents the particle area, and R represents the particle size (diameter).

<Stabilizer Content (mol%) in Zirconia Composition>

The stabilizer content (mol%) in the zirconia composition was measured as a stabilizer content relative to the total mole of zirconia and stabilizer, using an X-ray fluorescence (XRF) analyzer (RX3000, manufactured by Matsusada Precision Inc.).

<Measurement Method of Half Width of Stabilizer-Derived Peak in Zirconia Composition>

The half width of a stabilizer-derived peak in a zirconia composition of the present invention was determined using sample powders obtained by drying the zirconia composition at room temperature. The measurement was conducted on each sample using an Automated Horizontal Multipurpose X-Ray Diffractometer (SmartLab, manufactured by Rigaku Corporation) and Integrated X-Ray Analysis Software (SmartLab Studio II, manufactured by Rigaku Corporation) under the following conditions. The half width was determined for the peak occurring around 29°.

X-ray source: Cu K$\alpha$ ($\lambda$ = 1.54186 Å)
Goniometer length: 300 mm
Optical system: focusing technique
Detector: high-speed 1D X-ray detector (D/teX Ultra 250)
Monochromatization: K$\beta$ filter
Tube voltage: 40 kV
Tube current: 30 mA
Scan axis: 2$\theta$/$\theta$
Scan speed: 0.2°/min
Sampling step: 0.01°

<Measurement of Monoclinic Crystal Fraction $f_m$ of Zirconia Pre-Sintered Body>

The monoclinic crystal fraction $f_m$ in the present invention was determined through the analysis of the crystalline phase in a pre-sintered body. Specifically, the monoclinic crystal fraction $f_m$ was determined from the following formula by conducting X-ray diffraction (XRD) measurements.

$$f_m = I_{28}/(I_{28}+I_{30})*100 \qquad\qquad (1),$$

wherein $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

For the measurements, disc-shaped zirconia pre-sintered bodies of Examples and Comparative Examples were used as samples.

<Measurement Method of Compositional Distribution of Zirconia Pre-Sintered Body>

The compositional distribution of the zirconia pre-sintered body was measured under the following conditions, using a field-emission scanning electron microscope (FE-SEM Reglus 8220, manufactured by Hitachi High-Tech Corporation) and an energy dispersive X-ray analyzer (Aztec Energy X-Max50, manufactured by Oxford Instruments). Zirconia and yttrium elements were observed at 2.042 keV and 1.923 keV, respectively. The average value (mol%) was determined for yttrium elements for 10 particles originating from the stabilizer.

Measurement magnification: 20,000×
Analysis mode: point analysis
Acceleration voltage: 5 kV
Working distance: 15 mm ± 1 mm
X-ray extraction angle: 30 degrees
Dead time: 7%
Measurement time: 100 seconds

<Measurement of $\Delta L^*$(W-B) of Zirconia Sintered Body>

A spectrophotometer (CM-3610A manufactured by Konica Minolta Japan) was used for the measurement of $\Delta L^*$(W-B) of zirconia sintered bodies. Here, $\Delta L^*$(W-B) means the difference between the lightness ($L^*$) against a white background and the lightness ($L^*$) against a black background. The $L^*$ value is an $L^*$ value in the chromaticity (color space) of the $L^*a^*b^*$ color system (JIS Z 8781-4:2013). The white background means the white part of the hiding-power test paper described in JIS K 5600-4-1:1999, Part 4, Section 1, and the black background means the black part of the hiding-power test paper. The measurement was conducted with the F11 illuminant, and the reflected light was measured. A disc-shaped zirconia sintered body measuring 16 mm in diameter and 1.2 mm in thickness, obtained through mirror polishing, was used as the sample.

Two types of zirconia sintered bodies were prepared as samples: a zirconia sintered body (first sintered body) sintered at a highest sintering temperature of 1,300°C for 120 minutes (120-min sintering), and a zirconia sintered body (second sintered body) sintered at a highest sintering temperature of 1,300°C for 10 minutes (10-min sintering). The average value was determined for each sintered body (n = 3).

The relationship between $\Delta L_1^*$(W-B) and $\Delta L_2^*$(W-B) was also evaluated, where $\Delta L_1^*$(W-B) is the first translucency of the first sintered body prepared through 120-min sintering at 1,300°C, and $\Delta L_2^*$(W-B) is the second translucency of the second sintered body prepared through 10-min sintering at 1,300°C.

In Comparative Examples 1, 2, 5, and 6, the same method was used to measure translucency, represented by $\Delta L^*$(W-B), except that the highest sintering temperature was varied as shown in Table 2.

<Opalescent Properties of Zirconia Sintered Body>

A disc-shaped zirconia sintered body measuring 16 mm in diameter and 1.2 mm in thickness, the same sample used for the measurement of $\Delta L^*$(W-B), was used for the evaluation of the opalescent properties of the zirconia sintered body.

The opalescent properties of the zirconia sintered body were determined by measuring the transmitted light and reflected light using the F11 illuminant of the spectrophotometer CM-3610A manufactured by Konica Minolta Japan, and calculating the OP value using the following mathematical formula (2).
[Math. 4]

$$\text{OP value} = \sqrt{\left(a^*_{\text{transmission}} - a^*_{\text{reflection}}\right)^2 + \left(b^*_{\text{transmission}} - b^*_{\text{reflection}}\right)^2} \qquad (2)$$

wherein $a^*_{\text{transmission}}$ and $b^*_{\text{transmission}}$ represent the color coordinates of $L^*a^*b^*$ color system for transmitted light, and $a^*_{\text{reflection}}$ and $b^*_{\text{reflection}}$ represent the color coordinates of $L^*a^*b^*$ color system for reflected light.

In view of the appearance of the dental material, the preferred OP value is less than 15, more preferably 10 or less, even more preferably 7 or less.

<Crystal Grain Size Measurement and Calculation of Particle Size Distribution for Zirconia Sintered Body>

For the zirconia sintered body obtained in each Example and Comparative Example, surface images were captured with a scanning electron microscope (VE-9800 manufactured by Keyence under this trade name). After indicating grain boundaries on individual crystal grains in the captured image, the crystal grain size of each crystal grain was measured by image analysis. The crystal grain size was measured using image analysis software (Image-Pro Plus manufactured by Hakuto Co., Ltd. under this trade name). The captured SEM image was subjected to binarization, and the brightness range was adjusted to enhance clarity of the grain boundaries, allowing for the recognition of particles in the field (region). The crystal grain size from Image-Pro Plus represents the diameter through the center of gravity of the particle, and it is the average of the measurements of the length of a line segment connecting the contour line and passing through the center of gravity determined from the contour line of the particle, conducted at 2-degree intervals with the center of gravity as the central point. In the SEM images (10 fields) of Examples and Comparative Examples, the crystal grain size was determined for all crystal grains not extending beyond the edges of the image.

The particle size distribution (number-based particle size distribution) was created by plotting the relationship between the crystal grain size of individual particles and the number of crystals.

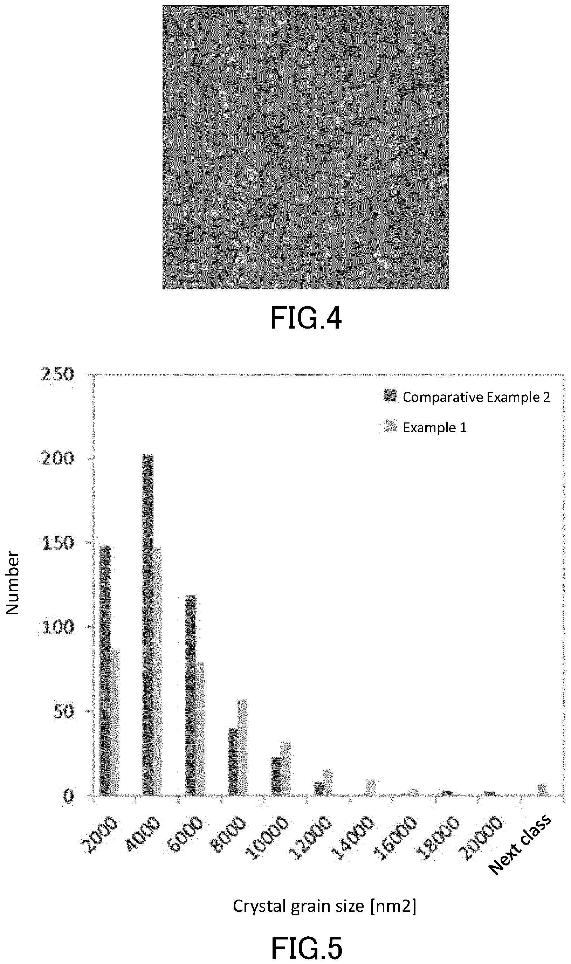

By plotting the relationship between crystal size (area) and the number of crystals obtained from individual crystal grains, it is also possible to create a crystal chart (number-based area distribution) such as that shown in FIG. 5.

Note that particles not extending beyond the edges of the image are particles excluding those with contour lines extending beyond the screen of the SEM image (particles with their contour lines interrupted by the boundary lines at the top, bottom, left, and right). To select the crystal grain size of all particles not extending beyond the edges of the image, the option in Image-Pro Plus was used that excludes all particles lying on the boundary lines.

<Measurement of Linear Light Transmittance>

The linear light transmittance of zirconia sintered bodies with a thickness of 1.0 mm was determined using a turbidimeter (Haze Meter NDH 4000 manufactured by Nippon Denshoku Industries Co., Ltd.). The measurement was conducted with an integrating sphere by allowing light from the illuminant to transmit and scatter on the sample. In the measurement of linear light transmittance, the linear light transmittance was measured according to ISO 13468-1:1996 and JIS K 7361-1:1997, and haze was measured according ISO 14782-1:1999 and JIS K 7136:2000. For the measurement, a disc-shaped zirconia sintered body, measuring 16 mm in diameter and 1.0 mm in thickness, was used as the sample after polishing the both surfaces to mirror finish.

[Production Example 1] (Zirconia Particles with Average Primary Particle Diameter r1 of 35 nm)

A 1.0 L aqueous solution of 0.62 mol/L of zirconium oxychloride, and a 0.5 L aqueous solution of 1.9 mol/L of sodium hydroxide were separately prepared.

After pouring 1.0 L of purified water into a precipitation vessel, the zirconium oxychloride aqueous solution and the sodium hydroxide aqueous solution were simultaneously poured into the vessel to precipitate zirconium oxychloride, yielding a slurry.

Following filtration and washing, 22.2 g of acetic acid was added into the slurry, and the mixture underwent hydrothermal treatment at 200°C for 2 hours. The resulting slurry was subjected to centrifugal filtration using a membrane filter with a pore size of 100 nm to obtain a zirconia slurry with no coarse particles. The zirconia particles had an average primary particle diameter of 35 nm. Subsequently, the slurry was concentrated in an evaporator, yielding an aqueous slurry containing 20 mass% of zirconia particles.

[Production Example 2] (Zirconia Particles with Average Primary Particle Diameter r1 of 50 nm)

The slurry of Production Example 1 was placed in a centrifuge tube, and centrifuged at 3,000 rpm for 5 minutes. This was followed by the removal of the upper portion of the slurry in the centrifuge tube to obtain a zirconia slurry. The zirconia particles contained in the zirconia slurry had an average primary particle diameter of 50 nm. Subsequently, the slurry was concentrated in an evaporator, yielding an aqueous slurry containing 20 mass% of zirconia particles.

[Production Example 3] (Zirconia Particles with Average Primary Particle Diameter r1 of 10 nm)

The slurry of Production Example 1 was placed in a centrifuge tube, and centrifuged at 3,000 rpm for 5 minutes. The supernatant was then removed by decantation to obtain a zirconia slurry. The zirconia particles contained in the zirconia slurry had an average primary particle diameter of 10 nm. Subsequently, the slurry was concentrated in an evaporator, yielding an aqueous slurry containing 20 mass% of zirconia particles.

[Production Example 4] (Yttria Particles with Average Primary Particle Diameter r2 of 20 nm)

Seven kilograms of water was added into three kilograms of yttrium oxide, and the mixture was subjected to bead milling to obtain an aqueous slurry with dispersed yttrium oxide. The resulting slurry was subjected to centrifugal filtration using a membrane filter with a pore size of 100 nm to obtain a yttria slurry with no coarse particles. The yttria particles contained in the slurry had an average primary particle diameter of 20 nm. Subsequently, the slurry was concentrated in an evaporator, yielding an aqueous slurry containing 20 mass% of yttria particles.

[Production Example 5] (Yttria Particles with Average Primary Particle Diameter r2 of 50 nm)

The slurry of Production Example 4 was placed in a centrifuge tube, and centrifuged at 3,000 rpm for 5 minutes. This was followed by the removal of the upper portion of the slurry in the centrifuge tube to obtain a yttria slurry. The yttria particles contained in the yttria slurry had an average primary particle diameter of 50 nm. Subsequently, the slurry was concentrated in an evaporator, yielding an aqueous slurry containing 20 mass% of yttria particles.

[Production Example 6] (Yttria Particles with Average Primary Particle Diameter r2 of 10 nm)

The slurry of Production Example 4 was placed in a centrifuge tube, and centrifuged at 3,000 rpm for 5 minutes. The supernatant was then removed by decantation to obtain a yttria slurry. The yttria particles contained in the yttria slurry had an average primary particle diameter of 10 nm. Subsequently, the slurry was concentrated in an evaporator, yielding an aqueous slurry containing 20 mass% of yttria particles.

[Production Example 7] (Zirconia Particles with Average Primary Particle Diameter r1 of 100 nm)

Seven kilograms of water was added into three kilograms of zirconia, and the mixture was subjected to bead milling to obtain an aqueous slurry with dispersed zirconia. The zirconia particles contained in the slurry had an average primary particle diameter of 100 nm. Subsequently, the slurry was concentrated in an evaporator, yielding an aqueous slurry containing 20 mass% of zirconia particles.

[Production Example 8] (Yttria Particles with Average Primary Particle Diameter r2 of 100 nm)

Seven kilograms of water was added into three kilograms of yttria, and the mixture was subjected to bead milling to obtain an aqueous slurry with dispersed yttrium oxide. The yttria particles contained in the slurry had an average primary particle diameter of 100 nm. Subsequently, the slurry was concentrated in an evaporator, yielding an aqueous slurry containing 20 mass% of yttria particles.

[Production Example 9] (Zirconia Particles Forming Solid Solution with Yttria and having Average Primary Particle Diameter of 40 nm)

A 1.0 L mixed aqueous solution of 0.62 mol/L of zirconium oxychloride and 0.052 mol/L of yttrium chloride, and a 0.5 L aqueous solution of 1.9 mol/L of sodium hydroxide were separately prepared.
After pouring 1.0 L of purified water into a precipitation vessel, the mixed aqueous solution and the sodium hydroxide aqueous solution were simultaneously poured into the vessel to coprecipitate zirconium oxychloride and yttrium chloride, yielding a slurry.
Following filtration and washing, 22.2 g of acetic acid was added into the slurry, and the mixture underwent hydrothermal treatment at 220°C for 3 hours. The resulting slurry was subjected to centrifugal filtration using a membrane filter with a pore size of 100 nm to obtain a zirconia slurry with no coarse particles. The zirconia particles forming a solid solution with yttria in the slurry had an average primary particle diameter of 40 nm. Subsequently, the slurry was concentrated in an evaporator, yielding an aqueous slurry containing 20 mass% of zirconia particles forming a solid solution with yttria.

[Production Example 10] (Zirconia Particles Forming Solid Solution with Yttria and having Average Primary Particle Diameter of 15 nm)

A 1.0 L mixed aqueous solution of 0.62 mol/L of zirconium oxychloride and 0.065 mol/L of yttrium chloride, and a 0.5 L aqueous solution of 1.9 mol/L of sodium hydroxide were separately prepared.
After pouring 1.0 L of purified water into a precipitation vessel, the mixed aqueous solution and the sodium hydroxide aqueous solution were simultaneously poured into the vessel to coprecipitate zirconium oxychloride and yttrium chloride, yielding a slurry.

Following filtration and washing, 22.2 g of acetic acid was added into the slurry, and the mixture underwent hydrothermal treatment at 190°C for 2 hours. The resulting slurry was subjected to centrifugal filtration using a membrane filter with a pore size of 100 nm, and purified water was added to achieve a solid concentration (concentration of zirconia and yttria) of 5.0 mass%, yielding a zirconia slurry with no coarse particles. The zirconia particles contained in the zirconia slurry had an average primary particle diameter of 15 nm.

[Example 1]

Isopropanol, in a quantity 9 times the volume of the slurry, was added to the slurries obtained in Production Example 3 and Production Example 5, where the mass percentages of the slurries were 94.6 mass% and 5.4 mass%, respectively. These were thoroughly mixed in a centrifuge tube, and centrifuged at 4,000 rpm for 10 minutes. The supernatant was removed after confirming settling of a white material. After adding isopropanol again, the mixture was thoroughly mixed, and centrifuged at 4,000 rpm for 10 minutes. The supernatant was removed after confirming settling of a white material, and methanol was added to provide an equivalent volume to that of the slurry used. A methanol substituted slurry was obtained after thorough mixing. The remaining water content of the methanol substituted slurry was 0.08 mass% as measured with a Karl Fischer aquameter.

To the slurry were added 1 mass% of glycerin relative to 100 mass% of the solids (zirconia and yttria) in the slurry, and 2 mass% of acrylic binder KFE-124 (manufactured by Goo Chemical Co., Ltd.) relative to 100 mass% of the solids. These were ultrasonically dispersed at 40 kHz for 1 hour to obtain an additive-containing slurry.

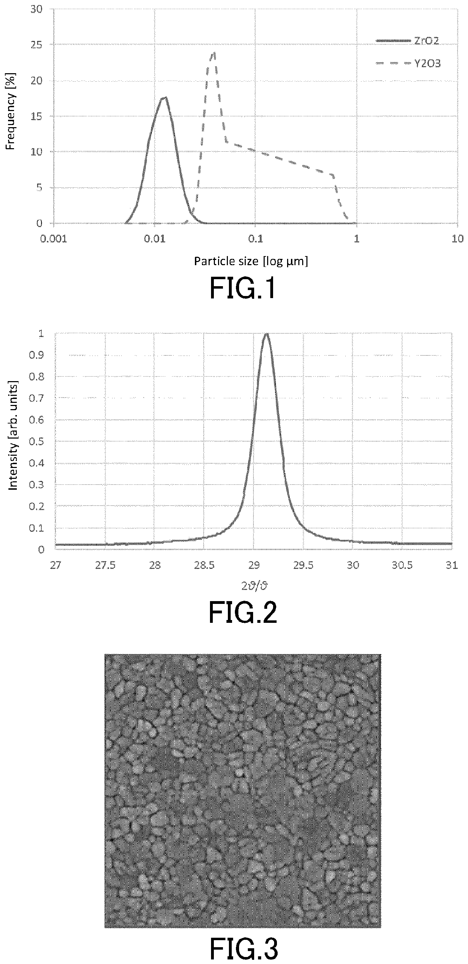

The additive-containing slurry was supercritically dried with a supercritical drying machine, using the following procedure. Specifically, the additive-containing slurry was placed in a pressure vessel, and the pressure vessel was joined to a supercritical carbon dioxide extractor. After checking for pressure leaks, the pressure vessel and the preheating tube were immersed in a water bath that had been heated to 60°C, and were left to stand for 10 minutes to stabilize after increasing temperature to 80°C and increasing pressure to 25 MPa. Thereafter, carbon dioxide was introduced under predetermined conditions, together with methanol used as an entrainer (temperature: 80°C, pressure: 25 MPa, carbon dioxide flow rate: 10 mL/min, entrainer (methanol) flow rate: 1.5 mL/min). After an elapsed time period of two hours, the addition of methanol was stopped, without halting the introduction of carbon dioxide. After two hours of sole carbon dioxide introduction, its delivery was stopped, and the pressure was gradually reduced from 25 MPa back to ordinary pressure over a time period of approximately 20 minutes while maintaining the temperature at 80°C. Subsequently, the pressure vessel was removed from the water bath and cooled to ordinary temperature, then opened to collect the processed sample, obtaining a zirconia composition containing zirconia particles and yttria particles. The yttria content in the zirconia composition was 3 mol% as measured with an X-ray fluorescence analyzer (XRF analyzer). FIG. 1 represents a particle size distribution of the zirconia composition in terms of particle diameter. FIG. 2 represents an XRD pattern of yttria in the zirconia composition.

The powder obtained was uniaxially pressed into a disc shape of a predetermined size, and was subjected to a cold isostatic pressing (CIP) process (200 MPa pressure) to increase density and obtain a zirconia molded body. The diameter of the zirconia molded body was set at 20 mm to allow it to be processed into zirconia sintered bodies of the sizes noted in the evaluations of various properties above, taking into consideration the anticipated shrinkage during sintering and reduction in thickness due to the polishing process. As for thickness, multiple zirconia molded bodies were produced in different thicknesses.

The resulting zirconia molded body was pre-sintered at 500°C for 2 hours under ordinary pressure to obtain a zirconia pre-sintered body. FIG. 3 represents a compositional distribution (SEM-EDX) of the crystalline structure of the zirconia pre-sintered body produced.

The zirconia pre-sintered body was sintered at 1,300°C for 2 hours under ordinary pressure to obtain a zirconia sintered body.

[Example 2]

A zirconia composition, a pre-sintered body, and a sintered body were obtained in the same manner as in Example 1, except that the slurries obtained in Production Example 2 and Production Example 6 were used in 94.6 mass% and 5.4 mass%, respectively. The composition had a yttria content of 3 mol% as measured with an XRF analyzer.

[Example 3]

A zirconia composition, a pre-sintered body, and a sintered body were obtained in the same manner as in Example 1, except that the slurries obtained in Production Example 1 and Production Example 4 were used in 92.1 mass% and 7.9 mass%, respectively. The composition had a yttria content of 4.5 mol% as measured with an XRF analyzer.

[Example 4]

A zirconia composition, a pre-sintered body, and a sintered body were obtained in the same manner as in Example 1, except that the slurries obtained in Production Example 3 and Production Example 5 were used in 86.3 mass% and 13.7 mass%, respectively. The composition had a yttria content of 8 mol% as measured with an XRF analyzer.

[Example 5]

A zirconia composition, a pre-sintered body, and a sintered body were obtained in the same manner as in Example 1, except that the slurries obtained in Production Example 2 and Production Example 6 were used in 86.3 mass% and 13.7 mass%, respectively. The composition had a yttria content of 8 mol% as measured with an XRF analyzer.

[Comparative Example 1]

A zirconia molded body and a pre-sintered body were obtained in the same manner as in Example 1, using the slurry obtained in Production Example 9. The slurry had a yttria content of 4 mol% as measured with an XRF analyzer.
The pre-sintered body was placed in a sialon container, set for HIP, and processed in argon gas at a temperature of 1,100°C and 150 MPa pressure. After being cooled to room temperature, the processed material was heat-treated in air at 1,000°C under ordinary pressure to yield a zirconia sintered body.

[Comparative Example 2]

A zirconia molded body and a pre-sintered body were obtained in the same manner as in Example 1, using the slurry obtained in Production Example 10. FIG. 4 represents a compositional distribution (SEM-EDX) of the crystalline structure of the zirconia pre-sintered body produced. The slurry had a yttria content of 5 mol% as measured with an XRF analyzer.
The zirconia pre-sintered body was sintered at 1,100°C for 2 hours under ordinary pressure to yield a zirconia sintered body.

[Comparative Example 3]

A zirconia composition, a pre-sintered body, and a sintered body were obtained in the same manner as in Example 1, except that the slurries obtained in Production Example 7 and Production Example 6 were used in 91.2 mass% and 8.8 mass%, respectively. The composition had a yttria content of 5 mol% as measured with an XRF analyzer.

[Comparative Example 4]

A zirconia composition, a pre-sintered body, and a sintered body were obtained in the same manner as in Example 1, except that the slurries obtained in Production Example 3 and Production Example 8 were used in 91.2 mass% and 8.8 mass%, respectively. The composition had a yttria content of 5 mol% as measured with an XRF analyzer.

[Comparative Example 5]

Comparative Example 5 was conducted in a manner equivalent to Example 1 of Patent Literature 3 (WO2020/179877), as follows.
A 1.0 L aqueous solution of 0.62 mol/L of zirconium oxychloride, a 1.0 L aqueous solution of 0.038 mol/L of yttrium chloride, and two portions of a 0.5 L aqueous solution of 1.9 mol/L of sodium hydroxide were separately prepared.
Two precipitation vessels were prepared, and 1.0 L of purified water was poured into each vessel. The zirconium oxychloride aqueous solution and the sodium hydroxide aqueous solution were simultaneously poured into one vessel, while the yttrium chloride aqueous solution and the sodium hydroxide aqueous solution were simultaneously poured into the other vessel. This led to the precipitation of zirconium oxychloride and yttrium chloride, resulting in the formation of slurries.
Following filtration and washing, each slurry received an addition of 22.2 g of acetic acid and underwent hydrothermal treatment at 200°C for 3 hours. The resulting slurry was subjected to centrifugal filtration using a membrane filter having a pore size of 100 nm, and purified water was added to achieve a solid concentration (a concentration of zirconia or yttria) of 5.0 mass%, yielding a zirconia slurry and yttria slurry with no coarse particles. The zirconia particles and yttria particles contained in their respective slurries had an average primary particle diameter of 15 nm, and particles with particle diameters exceeding 100 nm were not observable. By gradually introducing 0.5 L of the yttria slurry to 0.5 L of the zirconia slurry in a dropwise fashion at a rate of 10 mL/min at room temperature, a 1-L slurry mixture was obtained. The mixed slurry had a yttria content of 3 mol% as measured with an XRF analyzer.

The mixed slurry was used as molding slurry and poured into a plaster mold, left at room temperature for 2 weeks, and underwent cold isostatic pressing (CIP) (170 MPa pressure) to increase density, yielding a zirconia molded body. The plaster mold was created to provide a disc shape, 20 mm in diameter and 2.5 mm in thickness, for the molded body before CIP.

The plaster mold was fabricated by mixing water with plaster (Noritake Dental Plaster, manufactured by Kuraray Noritake Dental Inc.) at a mixing ratio of 50 mass%. The zirconia molded body was pre-sintered at 500°C for 2 hours under ordinary pressure to obtain a zirconia pre-sintered body.

Subsequently, the zirconia pre-sintered body was sintered at 1,100°C for 10 minutes under ordinary pressure to yield a zirconia sintered body containing 3 mol% of yttria.

[Comparative Example 6]

Comparative Example 6 was conducted in a manner equivalent to Example 11 of Patent Literature 3 (WO2020/179877), as follows.

A 1.0 L mixed aqueous solution of 0.62 mol/L of zirconium oxychloride and 0.066 mol/L of yttrium chloride, and a 0.5 L aqueous solution of 1.9 mol/L of sodium hydroxide were separately prepared.

After pouring 1.0 L of purified water into a precipitation vessel, the mixed aqueous solution and the sodium hydroxide aqueous solution were simultaneously poured into the vessel. This led to the coprecipitation of zirconium oxychloride and yttrium chloride, resulting in the formation of a slurry.

Following filtration and washing, the slurry received an addition of 22.2 g of acetic acid and underwent hydrothermal treatment at 200°C for 1 hour. The resulting slurry was subjected to centrifugal filtration using a membrane filter having a pore size of 100 nm, and purified water was added to achieve a solid concentration (a concentration of zirconia and yttria) of 5.0 mass%, yielding a zirconia slurry with no coarse particles. This zirconia slurry contained 0.28 mass% of zirconia particles with particle diameters exceeding 100 nm. The yttria content in the slurry was 5 mol% as measured with an XRF analyzer.

A zirconia molded body, a zirconia pre-sintered body, and a zirconia sintered body, each with a yttria content of 5 mol%, were obtained in the same manner as in Comparative Example 5, except that the zirconia slurry obtained above was used as molding slurry.

The results of the measurements for each Example and Comparative Example, conducted using the methods described above, are presented in Tables 1 and 2.

[Table 1]

| | Zirconia composition | | | | | Zirconia pre-sintered body | |
|---|---|---|---|---|---|---|---|
| | Average particle diameter r1 of zirconia particles [nm] | Average particle diameter r2 of yttria particles [nm] | Ratio of average particle diameters r2/r1 | Yttria content [mol%] | Half width of yttria-derived peak | Monoclinic crystal fraction $f_m$ [%] | Compositional distribution Amount of yttrium element [mol%] |
| Ex. 1 | 10 | 50 | 5.00 | 3.0 | 0.27 | 85 | 31.8 |
| Ex. 2 | 50 | 10 | 0.20 | 3.0 | 0.53 | 70 | 43.6 |
| Ex. 3 | 35 | 20 | 0.57 | 4.5 | 0.37 | 82 | 45.8 |
| Ex. 4 | 10 | 50 | 5.00 | 8.0 | 0.27 | 71 | 52.4 |
| Ex. 5 | 50 | 10 | 0.20 | 8.0 | 0.53 | 55 | 88.1 |
| Com. Ex. 1 | (Yttria solid solution, average particle diameter of 40 nm) | | - | 4.0 | - | 6 | 9.8 |
| Com. Ex. 2 | (Yttria solid solution, average particle diameter of 15 nm) | | - | 5.0 | - | 4 | 6.1 |
| Com. Ex. 3 | 100 | 10 | 0.10 | 5.0 | 0.27 | 49 | 21.1 |
| Com. Ex. 4 | 10 | 100 | 10.00 | 5.0 | 0.18 | 73 | 4.5 |

(continued)

| | | Zirconia composition | | | | Zirconia pre-sintered body | |
|---|---|---|---|---|---|---|---|
| | | Average particle diameter r1 of zirconia particles [nm] | Average particle diameter r2 of yttria particles [nm] | Ratio of average particle diameters r2/r1 | Yttria content [mol%] | Half width of yttria-derived peak | Monoclinic crystal fraction $f_m$ [%] | Compositional distribution Amount of yttrium element [mol%] |
| Com. Ex. 5 | 15 | 15 | 1.00 | 3.0 | 1.80 | 99 | 54.7 |
| Com. Ex. 6 | - | - | - | 5.0 | 1.85 | 62 | 9.1 |

[Table 2]

| | Zirconia sintered body | | | | | | | |
|---|---|---|---|---|---|---|---|---|
| | Highest sintering temperature [°C] | OP value | Position of primary peak top in particle size distribution[1] [nm] | Fraction of particles with particle diameter exceeding 100 nm [%] | Linear light transmittance [%] | $\Delta L1^*$ (W-B) | $\Delta L2^*$ (W-B) | $\Delta L2^*$ (W-B) /$\Delta L1^*$ (W-B) |
| Ex. 1 | 1300 | 5.3 | 70.5 | 7 | 1.2 | 12 | 11 | 0.92 |
| Ex. 2 | 1300 | 5.0 | 92.8 | 3 | 1.7 | 15 | 13 | 0.87 |
| Ex. 3 | 1300 | 10 | 76.1 | 5 | 2.1 | 19 | 17 | 0.89 |
| Ex. 4 | 1300 | 6.9 | 81.1 | 9 | 1.6 | 16 | 15 | 0.94 |
| Ex. 5 | 1300 | 6.1 | 98.8 | 12 | 0.9 | 9 | 8 | 0.89 |
| Com. Ex. 1 | 1100 | 18 | 82.2 | 1 | 5.5 | 12 | 9 | 0.75 |
| Com. Ex. 2 | 1100 | 19 | 71.4 | 1 | 2.7 | 19 | 14 | 0.74 |
| Com. Ex. 3 | 1300 | 15 | 75.7 | 2 | 1.7 | 15 | 12 | 0.80 |
| Com. Ex. 4 | 1300 | 8.0 | 320.5 | 16 | 0.1 | 4 | 3 | 0.75 |
| Com. Ex. 5 | 1100 | 18 | 71.2 | 1 | 1.7 | 15 | 11 | 0.73 |
| Com. Ex. 6 | 1100 | 19 | 76.4 | 1 | 7.6 | 18 | 14 | 0.78 |
| 1) Particle size distribution is number-based particle size distribution. | | | | | | | | |

As can be seen in Table 2, Examples 1 to 5 showed a reduced occurrence of structural color, and low opalescent properties, and exhibited outstanding translucency even after brief sintering. In Examples 1 to 5, at least a part of yttria is not dissolved in zirconia as a solid solution, leading to a predetermined local content (abundance) of yttrium element in the compositional distribution of the crystalline structure of the zirconia pre-sintered body. This resulted in a partially irregular crystalline structure, as depicted in FIG. 3 (Example 1). The sintered body contained a predetermined amount of particles exceeding 100 nm after the sintering process. This is believed to be a factor that contributed to the reduction of opalescent properties.

In contrast, it was not possible to achieve the reduction of opalescent properties in Comparative Examples 1 to 3, and 5 to 6.

In Comparative Examples 1 and 2, the zirconium and yttrium elements formed a solid solution, with a small abundance of yttrium element in the compositional distribution. Consequently, as depicted in FIG. 4 (Comparative Example 2), the sintered body exhibited an orderly crystalline structure after sintering, with hardly any particles exceeding 100 nm. This probably explains the incapability to reduce opalescent properties.

In Comparative Example 3, the incapability to reduce opalescent properties is likely to be due to the low monoclinic crystal fraction $f_m$.

In Comparative Example 4, the excessively large average particle diameter of yttria particles in the zirconia composition resulted in inferior translucency, despite standard sintering.

As illustrated in Comparative Example 5, the zirconia composition, unlike Examples, exhibited low crystallinity when yttria was formed in the liquid phase. This resulted in the half width of the stabilizer-derived peak in the XRD pattern falling outside the desired ranges of the present invention. Additionally, the monoclinic crystal fraction $f_m$ in the zirconia pre-sintered body remained outside the desired ranges of the present invention.

As illustrated in Comparative Example 6, despite the average particle diameter (r1) of the zirconia particles and the average particle diameter (r2) of the stabilizer particles in the zirconia composition falling within the desired ranges, the zirconia composition exhibited low crystallinity, and the half width of the stabilizer-derived peak in the XRD pattern failed to satisfy the desired ranges of the present invention. Consequently, it was not possible to bring the local abundance of the stabilizer within the desired ranges of the present invention, even if the monoclinic crystal fraction $f_m$ in the zirconia pre-sintered body could satisfy the desired ranges of the present invention.

FIG. 5 shows a crystal chart (number-based area distribution) plotting the relationship between the size (area) of crystals and the number of crystals derived from the crystal grains in the zirconia sintered bodies of Comparative Example 2 and Example 1.

As depicted in FIG. 5, the comparison between Comparative Example 2 (on the left side) and Example 1 (on the right side) reveals that Example 1 exhibits a relatively higher quantity of particles with larger particle diameters.

In Example 1, the proportion of particles with particle diameters exceeding 100 nm (representing the segment corresponding to "Next class" in FIG. 5) in the number-based particle size distribution fell in the range of 3% to 15%.

## Claims

1. A zirconia composition comprising a zirconia particle, and a stabilizer particle capable of preventing a phase transformation of zirconia, wherein:

   the zirconia particle has an average particle diameter (r1) of 1 to 60 nm,
   the stabilizer particle has an average particle diameter (r2) of 1 to 60 nm, and
   the half width of a peak derived from the stabilizer in a powder X-ray diffraction pattern by CuK$\alpha$ radiation is 0.05° to 1.0°.

2. The zirconia composition according to claim 1, wherein the content of the stabilizer is 2 to 9 mol% relative to the total mole of the zirconia and the stabilizer.

3. The zirconia composition according to claim 1 or 2, wherein the stabilizer is yttria.

4. The zirconia composition according to any one of claims 1 to 3, wherein the zirconia particle comprises a monoclinic crystal system.

5. A zirconia pre-sintered body comprising zirconia, and a stabilizer capable of preventing a phase transformation of zirconia, wherein:

   at least a part of the stabilizer is not dissolved in zirconia as a solid solution,
   the monoclinic crystal fraction $f_m$ represented by the mathematical formula (1) below is 50 to 98%, and
   the stabilizer has a local abundance of 10 to 90 mol% in particles derived from the stabilizer,

   $$f_m = I_{28}/(I_{28}+I_{30})*100 \qquad (1),$$

   wherein $f_m$ represents the fraction (%) of the monoclinic crystal system, $I_{28}$ represents the area intensity of a peak near $2\theta = 28°$, where the main peak of the monoclinic crystal system appears in XRD measurement, and $I_{30}$ represents the area intensity of a peak near $2\theta = 30°$, where the main peak of the tetragonal or cubic crystal system appears in XRD measurement.

6. The zirconia pre-sintered body according to claim 5, wherein the content of the stabilizer is 2 to 9 mol% relative to the total mole of the zirconia and the stabilizer.

7. The zirconia pre-sintered body according to claim 5 or 6, wherein the stabilizer is yttria.

8. The zirconia pre-sintered body according to any one of claim 5 to 7, which has an OP value of less than 15 in a sintered body of 1.2 mm thickness after 120 minutes of sintering at 900 to 1,400°C, as calculated from the following mathematical formula (2),
[Math. 1]

$$\text{OP value} = \sqrt{\left(a*_{\text{transmission}} - a*_{\text{reflection}}\right)^2 + \left(b*_{\text{transmission}} - b*_{\text{reflection}}\right)^2} \qquad (2)$$

wherein $a*_{\text{transmission}}$ and $b*_{\text{transmission}}$ represent the color coordinates of L*a*b* color system for transmitted light, and $a*_{\text{reflection}}$ and $b*_{\text{reflection}}$ represent the color coordinates of L*a*b* color system for reflected light.

9. The zirconia pre-sintered body according to any one of claims 5 to 8, which has a number-based particle size distribution with at least one peak top within a particle size range of 70 nm to 100 nm in a sintered body after 120 minutes of sintering at 900 to 1,400°C, and comprises 3 to 15% of particles with a particle diameter exceeding 100 nm in the sintered body.

10. The zirconia pre-sintered body according to any one of claims 5 to 9, which has a ΔL*(W-B) of 5 or more in a sintered body of 1.2 mm thickness after 120 minutes of sintering at 900 to 1,400°C.

11. The zirconia pre-sintered body according to any one of claims 5 to 10, wherein a first translucency $\Delta L_1*(W\text{-}B)$ of a first sintered body fabricated by 120 minutes of sintering at 1,300°C, and a second translucency $\Delta L_2*(W\text{-}B)$ of a second sintered body fabricated by 10 minutes of sintering at 1,300°C satisfy the relationship of the following mathematical formula (3),

$$\Delta L_2*(W\text{-}B)/\Delta L_1*(W\text{-}B) \geq 0.85 \qquad (3).$$

12. A method for producing a zirconia pre-sintered body, comprising using a zirconia composition of any one of claims 1 to 4.

13. A zirconia sintered body comprising zirconia, and a stabilizer capable of preventing a phase transformation of zirconia, wherein:
the zirconia sintered body has a stabilizer content of 2 to 9 mol% relative to the total mole of the zirconia and the stabilizer, and has a ΔL*(W-B) of 5 or more, and an OP value of less than 15, as calculated from the following mathematical formula (2), in a sintered body of 1.2 mm thickness,
[Math. 2]

$$\text{OP value} = \sqrt{\left(a*_{\text{transmission}} - a*_{\text{reflection}}\right)^2 + \left(b*_{\text{transmission}} - b*_{\text{reflection}}\right)^2} \qquad (2)$$

wherein $a*_{\text{transmission}}$ and $b*_{\text{transmission}}$ represent the color coordinates of L*a*b* color system for transmitted light, and $a*_{\text{reflection}}$ and $b*_{\text{reflection}}$ represent the color coordinates of L*a*b* color system for reflected light.

14. The zirconia sintered body according to claim 13, wherein the stabilizer is yttria.

15. The zirconia sintered body according to claim 13 or 14, which has a number-based particle size distribution with at least one peak top within a particle size range of 70 nm to 100 nm, and comprises 3 to 15% of particles with a particle diameter exceeding 100 nm.

16. A method for producing a zirconia sintered body, comprising using a zirconia composition of any one of claims 1 to 4, or a zirconia pre-sintered body of any one of claims 5 to 11.

**17.** The method for producing a zirconia sintered body according to claim 16, which comprises sintering at 900 to 1,400°C.

FIG.1

FIG.2

FIG.3

FIG.4

Crystal grain size [nm2]

FIG.5

## INTERNATIONAL SEARCH REPORT

| International application No. |
| --- |
| **PCT/JP2022/047475** |

### A. CLASSIFICATION OF SUBJECT MATTER

*C04B 35/486*(2006.01)i
FI: C04B35/486

According to International Patent Classification (IPC) or to both national classification and IPC

### B. FIELDS SEARCHED

Minimum documentation searched (classification system followed by classification symbols)

C04B35/486

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2016-523286 A (IVOCLAR VIVADENT INC.) 08 August 2016 (2016-08-08) paragraphs [0079]-[0113], fig. 1 | 13-15 |
| A | | 1-12, 16-17 |
| A | WO 2020/179876 A1 (KURARAY NORITAKE DENTAL INC.) 10 September 2020 (2020-09-10) entire text | 1-17 |
| A | WO 2020/179877 A1 (KURARAY NORITAKE DENTAL INC.) 10 September 2020 (2020-09-10) entire text | 1-17 |
| A | WO 2018/056330 A1 (KURARAY NORITAKE DENTAL INC.) 29 March 2018 (2018-03-29) entire text, all drawings | 1-17 |
| P, A | WO 2022/138881 A1 (KURARAY NORITAKE DENTAL INC.) 30 June 2022 (2022-06-30) entire text, all drawings | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 February 2023** | **21 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

### INTERNATIONAL SEARCH REPORT
**Information on patent family members**

| International application No. |
|---|
| **PCT/JP2022/047475** |

| Patent document cited in search report | | | Publication date (day/month/year) | Patent family member(s) | | | Publication date (day/month/year) |
|---|---|---|---|---|---|---|---|
| JP | 2016-523286 | A | 08 August 2016 | US | 2016/0095798 | A1 | |
| | | | | paragraphs [0079]-[0113], fig. 1 | | | |
| | | | | WO | 2014/209626 | A1 | |
| | | | | EP | 3013306 | A1 | |
| | | | | CN | 105338948 | A | |
| | | | | KR | 10-2016-0023766 | A | |
| WO | 2020/179876 | A1 | 10 September 2020 | US | 2022/0153649 | A1 | |
| | | | | entire document | | | |
| | | | | EP | 3936490 | A1 | |
| | | | | CN | 113490653 | A | |
| | | | | KR | 10-2021-0129198 | A | |
| WO | 2020/179877 | A1 | 10 September 2020 | US | 2022/0135486 | A1 | |
| | | | | entire document | | | |
| | | | | EP | 3936081 | A1 | |
| | | | | CN | 113490468 | A | |
| | | | | KR | 10-2021-0133275 | A | |
| WO | 2018/056330 | A1 | 29 March 2018 | US | 2020/0317581 | A1 | |
| | | | | entire document, all drawing | | | |
| | | | | EP | 3517518 | A1 | |
| | | | | CN | 109689593 | A | |
| | | | | KR | 10-2019-0047701 | A | |
| WO | 2022/138881 | A1 | 30 June 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008214168 A
- WO 2020179876 A
- WO 2020179877 A

- WO 2014126034 A
- JP 2000159621 A